(19) Europäisches Patentamt
European Patent Office
Office européen des brevets

(11) EP 1 188 730 A2

(12) **EUROPÄISCHE PATENTANMELDUNG**

(43) Veröffentlichungstag:
20.03.2002 Patentblatt 2002/12

(51) Int Cl.7: **C04B 38/08**

(21) Anmeldenummer: 01121286.7

(22) Anmeldetag: 05.09.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **19.09.2000 DE 10046298**

(71) Anmelder: **Technum GmbH**
**83707 Bad Wiessee (DE)**

(72) Erfinder:
• **Franke, Matthias, Dipl.-Ing.**
**01468 Moritzburg (DE)**
• **Niedner, Peter, Dr. Ing.**
**83707 Bad Wiessee (DE)**

(74) Vertreter: **Grünecker, Kinkeldey,**
**Stockmair & Schwanhäusser Anwaltssozietät**
**Maximilianstrasse 58**
**80538 München (DE)**

(54) **Kunststoffgebundene Leichtbau-Werkstoffe, Verfahren zur Herstellung und Verbundwerkstoffe**

(57) Die Erfindung betrifft Leichtbau-Werkstoffe, die ein Leichtgranulat, insbesondere ein mineralisches Schaumgranulat und ein organisches Bindemittel enthalten, wobei der Volumenanteil des Leichtgranulats im Werkstoff mindestens 50 % beträgt und dass die Bestandteile im Werkstoff gefügedicht gebunden sind. Ferner betrifft die Erfindung ein Verfahren zu ihrer Herstellung durch folgende Schritte: Einbringen des Leichtgranulats in eine Werkstückform, gegebenenfalls Erwärmen der Kornschüttung des Leichtgranulats, Einbringen des Bindemittels in die mit dem Leichtgranulathaufwerk gefüllte Werkstückform, Verfestigen des Bindemittels, und ein Verbundwerkstoff, enthaltend einen Kern aus dem erfindungsgemässen Leichtbauwerkstoff und eine den Kern vollständig oder teilweise umgebenden Oberfläche aus Stahl, Edelstahl, Faser-Laminaten oder Kunststoff

Fig. 1

Fig. 2

Fig. 3

EP 1 188 730 A2

**Beschreibung**

Die Erfindung betrifft Leichtbau-Werkstoffe, die ein Leichtgranulat, insbesondere ein mineralisches Schaumgranulat und ein organisches Bindemittel enthalten. Gegebenenfalls können sie in untergeordneter Menge Zusatzstoffe enthalten. Ferner betrifft die Erfindung ein Verfahren zu ihrer Herstellung und ein Verbundwerkstoff, enthaltend die erfindungsgemässen Leichtbauwerkstoffe.

Leichtbau-Werkstoffe finden in vielen Bereichen der Technik zunehmend Verwendung. Insbesondere im Verkehrswesen, z.B. im Automobilbau, haben sie wegen ihrer hohen Festigkeit und, im Vergleich zu den bisher üblichen Konstruktionsmaterialien, geringen Dichte in weitem Umfang Eingang gefunden, denn sie ermöglichen den Bau von energiesparenden, und damit umweltfreundlichen Automobilen. Bevorzugtes Interesse haben Leichtbau-Werkstoffe mit einer Dichte unterhalb von 1,0 g/cm$^3$, die somit unterhalb der Dichte der meisten Kunststoffe liegen.

Aus dem Stand der Technik ist es bekannt Kunststoffe mit anorganischen Komponenten zu mischen, um bestimmte Eigenschaften zu verbessern und/oder kostengünstigere Werkstoffe zu erzeugen. Füllstoffe, wie z.B. Kreide, oder Verstärkungsstoffe, wie z.B. Glasfasern, werden häufig in Kunststoffen verarbeitet. Die Dichte dieser bekannten anorganischen Komponenten ist jedoch etwa doppelt so hoch, wie die des Kunststoffes, so dass sie nicht geeignet sind die resultierende Dichte des Werkstückes, bestehend aus Kunststoff plus anorganischer Komponente, zu senken.

Es ist ferner bekannt, Kunststoff mit einer leichten feinkörnigen anorganischen Komponente, bestehend aus sogenannten Mikro-Hohlkugeln zu verarbeiten. Beim gegenwärtigen Stand der Fertigungstechnologie gelingt es jedoch nicht, hohe Prozentsätze solcher Komponenten in den Kunststoff einzuarbeiten. Der erreichbare Volumenanteil der Mikro-Hohlkugeln im Werkstück bleibt bei gefügedichten Werksstoffen auf Werte unter 50 Vol-% begrenzt. Die Dichte des erhaltenen Leichtbau-Werstoffes fällt deshalb hoch aus und aus ihm gefertigte Werkstücke sind für viele Anwendungsgebiete zu schwer. Auch ist von Nachteil, dass die Mikro-Hohlkugeln sehr teuer sind, was den Einsatz solcher Werkstoffe in Massenprodukten ausschliesst. Ein weiterer Nachteil ist der hohe Kunststoffanteil, der bei Massenprodukten die Verwendung von hochwertigen Kunststoffen ebenfalls aus wirtschaftlichen Gründen ausschliesst.

Es wurde daher bereits vorgeschlagen, anorganische Komponenten mit Kunststoff nicht gefügedicht, sondern haufwerksporig zu binden. Auf diese Weise ist es tatsächlich gelungen, den Kunststoffanteil im Werkstoff weit unter 50 Vol-% zu senken. Jedoch fallen bei solchen Werkstoffen die Festigkeitswerte im Vergleich zu gefügedicht gebundenen Werkstoffen stark ab, weshalb sie nur eingeschränkt verwendet werden können.

Eine gefügedichte Kunststoffmatrix ist jedoch nach dem Stand der Technik bei einer sehr hohen Packungsdichte von z.B. 80 Vol-% Leichtgranulat nicht herstellbar. Das liegt daran, dass bei den gebräuchlichen Verarbeitungsmethoden und Produktionsbedingungen immer eine Entmischung der Leichtgranulate, verbunden mit einer Verringerung der Packdichte auftritt.

Die Entmischung wird im wesentlichen durch den Dichteunterschied zwischen dem Leichtgranulat und der Kunststoff-Matrix, und insbesondere durch den Gewichtsunterschied der einzelnen Leichtgranulatkörnern unterschiedlicher Korngrösse, verursacht, mit der Folge, dass grosskörnige Leichtgranulate bei der Verarbeitung "aufschwimmen" und dass sich im unteren Bereich der Werkstückform Lehrstellen bilden und sich ferner dort feinkörnige Leichtgranulate akkumulieren.

Es ist weiterhin bekannt, statt Kunststoff ein Leichtmetall als Bindemittel für die anorganische Komponente einzusetzen. Obgleich sich dieser Werkstoff sehr bewährt hat, sind seinem Einsatz Grenzen gesetzt. Diese sehr leichten Leichtmetall-Werkstücke können bedingt durch die hohen Rohstoffkosten von Leichtmetall-Legierungen und durch hohe Verarbeitungskosten, aufgrund der hohen Produktionstemperaturen, nur für spezielle Werkstücke, z.B. aufwendige Fahrwerks- und Motorenteile, verwendet werden. Sie sind als Werkstoffe für Body, Karosserie und Innenausstattung von Kraftfahrzeugen ungeeignet, da sie zu schwer und zu kostenintensiv sind.

Es bestand daher die Aufgabe Leichtbau-Werkstoffe zu entwickeln, die hohen technischen Anforderungen genügen, insbesondere hohe Festigkeit und Duktilität aufweisen und die überdies so preisgünstig sind, dass ihrem Einsatz bei Massenprodukten wirtschaftliche Gründe nicht entgegenstehen. Ihr Einsatz soll nicht auf spezielle Anwendungen im Automobilbau, z.B. Fahrwerksteile bei Kraftfahrzeugen, beschränkt sein, sondern sich auch auf stationäre Verkehrseinrichtungen erstrecken und auch andere Anwendungen, z.B. im Baugewerbe und im Maschinenbau, einschliessen.

Die vorstehend beschriebene Aufgabe wird gelöst durch Leichtbau-Werkstoffe, die ein Leichtgranulat, insbesondere ein mineralisches Schaumgranulat, und ein organisches Bindemittel enthalten. Sie sind dadurch gekennzeichnet, dass der Volumenanteil des Leichtgranulats im Leichtbau-Werkstoff mindestens 50 Vol-% beträgt und dass die Bestandteile im Werkstoff gefügedicht gebunden sind.

Bevorzugt enthalten die erfindungsgemässen Leichtbau-Werkstoffe mindestens 80 Vol-% und insbesondere bevorzugt mindestens 90 Vol-% des Leichtgranulats.

Die erfindungsgemässen Leichtbau-Werkstoffe weisen eine Kombination von Eigenschaften auf, die bisher bei anderen Werkstoffen nicht beobachtet werden konnte. Sie zeichnen sich überraschenderweise durch hohe Festigkeitswerte, insbesondere durch eine sehr hohe Druckfestigkeit, bei extrem niedriger Dichte aus. Dabei sind die erfindungsgemässen Leichtbau-Werkstoffe duktil und in dieser Hinsicht Metallen vergleichbar bzw. diesen sogar weit überlegen. Durch Einsatz der erfindungsgemässen Leichtbau-Werkstoffe in der Verkehrstechnik sind neue und für Unfallopfer lebensrettende Lösungen möglich geworden.

Als gefügedicht werden Werkstoffe bezeichnet, bei denen das Leichtgranulat im wesentlichen vollständig in eine Matrix aus dem organischen Bindemittel eingebettet sind. Das organische Bindemittel bildet folglich eine fast porenfreie Matrix.

Leichtgranulate im Sinne der Erfindung sind fliessfähige, im wesentlichen kugelförmige Partikel. Sie haben eine Korngrösse zwischen 0,01 - 30 mm, vorzugsweise 0,04 - 16 mm und insbesondere bevorzugt zwischen 0,2 und 8 mm.

Die Geometrie und die Grösse der Leichtgranulat-Parikel sind für das Eigenschaftsbild des Leichtbau-Werkstoffs gemäss der Erfindung von besonderer Bedeutung. Grundsätzlich können die Teilchen eine beliebige Gestalt aufweisen. Jedoch muss dann u.U. eine geringe Packungsdichte und eine hohe resultierende Rohdichte des Werkstücks hingenommen werden. Es hat sich bewährt den Leichtbau-Werkstoff aus gut fliessfähigen Partikeln aufzubauen, die überwiegend kugelförmig oder annähernd kugelförmig sind. Kugelförmige Partikel führen dazu, dass das Leichtgranulat-Haufwerk nach Beendigung des Füllvorganges in die Werkstückform sehr dicht gepackt ist, denn im Gegensatz zu Leichtgranulat-Teilchen mit undefinierter Form weisen Leichgranulat-Teilchen in Kugelform ein sehr gutes Haufwerks-Fliessvermögen, d.h. das Verhalten des Leichtgranulat-Haufwerks bei der Verarbeitung, insbesondere bei der Füllung der Form des Werkstücks, auf und bilden weniger Kavernen. Eine dichte Packung des Leichtgranulats erfordert nur einen geringen Bindemittel-Einsatz.

Die erfindungsgemässen Granulate haben eine Rohdichte von 0,040 kg/l bis 0,600 kg/l. Vorzugsweise liegt die Rohdichte unter 0,300 kg/l. Ihre offene Oberflächen-Porosität liegt unterhalb 15%, vorzugsweise unter 5%.

Die Leichtgranulate sind entweder geschlossenporig oder weisen in besonderen Anwendungen eine nur geringe offene Oberflächen-Porosität im Bereich von 1% bis 10% bezogen auf das Gesamtvolumen auf. Die Infiltrierbarkeit des Korns durch das Bindemittel ist auf diese Porosität begrenzt. Sie weisen ferner eine geschlossene Volumen-Porosität auf, wobei die Poren mit einem Gas gefüllt sind. In der Regel sind die Poren sehr klein und haben einen Durchmesser von weniger als 1/10, vorzugsweise von weniger als 1/50 der Granulatgrösse. Insbesondere bei sehr kleinen Korngrössen, vorzugsweise im Bereich unter 0,2 mm, können auch Granulate mit einer einzigen Gasblase, sogenannte Hollow-Spheres oder andere Hohlkugeln erfindungsgemäss verwendet werden.

Die erfindungsgemäss angestrebte sehr hohe Packungsdichte stellt hohe Anforderungen an die Qualität des Leichtgranulats. Für eine Packung mit nur einer einzigen Korngrösse kann nur dann eine relativ hohe Packungsdichte erreicht werden, wenn die einzelnen Körner sich vom Auslegungskorn im Durchmesser nur geringförmig unterscheiden und nur eine geringe Abweichung von der Kugelform haben.

Es hat sich hierbei herausgestellt, dass die Anforderungen an die Abweichungen der Grösse der einzelnen Körner am besten durch eine angegebene Korngrössengruppe beschrieben werden kann. Die Korngrössengruppe benennt den Bereich der zulässigen Korngrössen, da es in der Praxis unmöglich ist eine einzige Korngrösse aus einer Kornschüttung auszuwählen. Eine gewählte Korngrössengruppe muss hierbei eine sehr enge Spannweite der Korngrössen aufweisen (z.B. 4 bis 5 mm, 2 bis 3 mm) und gleichzeitig muss innerhalb dieser Korngruppe ein Toleranzbereich von +/- 6% bezogen auf den minimalen und maximalen Durchmesser der Korngruppen eingehalten werden, um gute Packungsdichten zu erzielen. Wird dieser Toleranzbereich auf +/- 4% oder niedriger begrenzt, so sind praktisch optimale Packungsdichten erreichbar. Bei Erhöhung des Toleranzbereichs auf maximal 10% sind noch befriedigende Packungsdichten erreichbar. Über 10% lassen die Ergebnisse die Herstellung von qualitativ hochstehenden Produkten nicht erwarten. Der technische Klassifizierungsaufwand für die betreffenden Korngruppen muss diesen Anforderungen angepasst werden.

Vorzugsweise werden für den erfindungsgemässen Leichtbau-Werkstoff mineralische Leichtgranulate eingesetzt, deren Formgebung vor der Prozessstufe der Porosierung durch Pelletbildung in einem Pelletierteller erfolgt und die den Porosierungsofen in einer Schüttung durchlaufen, deren Höhe maximal 15 Korndurchmesser beträgt. Höhere Schüttdichten führen in der Produktion zur Deformation der Granulate mit der Folge, dass das Produkt keine Kugelform im erfindungsgemässen Toleranzbereich aufweist. Granulate, die wie üblich, durch den Einsatz von Pressen und Walzen erzeugt werden und /oder in höherer Schüttung durch den Ofen laufen, weisen im Gegensatz dazu höhere Abweichungen auf.

Es hat sich ferner gezeigt, dass eine maximale Abweichung der Körner von der Kugelform von +/- 4% des Kugeldurchmessers hohe Packungsdichten und Abweichungen im Bereich von +/- 8% noch befriedigende Packungsdichten gewährleisten, während Abweichungen von über +/- 10% bereits sehr schlechte Ergebnisse zur Folge haben. Für die erfindungsgemässen Leichtbau-Werkstoffe werden daher bevorzugt Granulate mit einer maximalen Abweichung von +/- 8%, vorzugsweise +/- 4% für die Packung verwendet.

Erfindungsgemäss werden bei geringerer Anforderung an die Packungsdichte wegen der einfacheren Pakkungsbildung Granulatkörner einer einzigen Korngrössengruppe verwendet.

Es hat sich ferner bewährt bei höheren Anforderungen an die Packungsdichte solche kugelförmigen Leichtgranulate einzusetzen, die aus Partikeln mit zwei unterschiedlichen Korngrössengruppen bestehen. Bevorzugt werden hierbei Partikelmischungen, die einen Anteil von mindestens 60 Vol-%, vorzugsweise mindestens 70 Vol-% kugelförmiger Teilchen des grösseren Durchmessers (im folgenden als Primärkorn bezeichnet) und maximal 40 Vol-%, vorzugsweise maximal 30 Vol-% kugelförmiger Teilchen des kleineren Durchmessers (im folgenden als Sekundärkorn bezeichnet) enthalten, wobei der Durchmesser des Primärkorns das 6-bis 12-fache, vorzugsweise mindestens das 10-fache des Durchmessers des Sekundärkorns beträgt.

Bei sehr hohen Anforderungen an die Packungsdichte werden weiterhin Leichtbau-Werkstoffe der erfindungsgemässen Art eingesetzt, die Gemische aus kugelförmigen Leichtgranulaten mit drei unterschiedlichen Korngrössengruppen enthalten. Unter diesen haben besondere Bedeutung Gemische aus Leichtgranulaten, deren grösste kugelförmige Partikel (Primärkorn) einen Anteil von mindestens 50 Vol-%, deren mittelgrosse kugelförmige Partikel (Sekundärkorn) einen Anteil von maximal 35 Vol-% und deren kleinste kugelförmige Partikel (im folgenden Tertiärkorn genannt) einen Anteil von maximal 15 Vol-%, jeweils bezogen auf das Leichtgranulat-Gemisch, aufweisen, wobei die Durchmesser von grossen und mittelgrossen sowie von mittelgrossen und kleinsten kugelförmigen Partikeln sich jeweils mindestens um das 6- bis 18-fache, vorzugsweise um das 12-fache unterscheiden.

Ferner kann vorgesehen sein, dass Gemische aus kugelförmigen Leichtgranulaten mit mehr als drei unterschiedlichen Korngrössen (Primärkorn, Sekundärkorn, Tertiärkorn, Quatärkorn usw.) eingesetzt werden. Hierbei hat es sich als vorteilhaft erwiesen, dass als kleinste Korngrösse Mikrokugeln mit einem Durchmesser zwischen 0,03 und 0,15 mm verwendet werden und dass die Korngrössenstufung zwischen den einzelnen Fraktionen von der Fraktion mit dem kleinsten Korndurchmesser bis zur Fraktion mit dem grössten Korndurchmesser jeweils um den gleichen Faktor mit einer Toleranz von +/- 20% erfolgt.

Erfindungsgemäss werden Leichtgranulate verschiedener stofflicher Beschaffenheit eingesetzt. So können in den neuen Werkstoffen mineralische Leichtgranulate verwendet werden. Zu ihnen zählen Stoffe mit oxidischer und/ oder mineralischer Zusammensetzung. Beispielhaft seien hier genannt: Alkalisilikate, Alkali-Erdalkali-Silikate, Alumosilikate, Borosilikate, sowie weitere Varianten in Verbindung mit dem System $CaO-SiO_2-Al_2O_3$ plus Metalloxide.

Bevorzugt werden hierbei Granulate aus mineralischen Stoffen, wie Aluminiumoxid (bis zu 100% $Al_2O_3$), wie Alkalisilikat (bis zu 100% Wasserglas) und dergl. verwendet. Bei Alkalisilkaten werden vorzugsweise mit 4% bis 10% Zinkoxid stabilisierte und durch Mikrowelle geschäumte Granulate aus Natriumwasserglas eingesetzt. Solche Materialien sind in der deutschen Patentanmeldung DE.199 09 077.7 ausführlich beschrieben.

Entsprechende mineralische Leichtgranulate sind in den Korngrössen bis zu 16 mm handelsübliche Produkte und z.B. unter den Bezeichnungen KeraGlas, KeraBims, KeraPlus, KeraLight, Poraver, Liaver, Liapor, Leca und Hollow-Spheres erhältlich.

Weiterhin können zwei oder mehrere mineralische Leichtgranulate unterschiedlicher Zusammensetzung und gegebenenfalls in unterschiedlichen Volumenanteilen in der Packung miteinander kombiniert werden. So kann erfindungsgemäss z.B. ein besonders druckfestes mineralisches Primärkorn, z.B. aus einem Gesteinsmehlschaum aus Basalt, das eine sehr hohe Festigkeit hat, mit einem oder mehreren weniger festen Unter-Körnern, z.B. aus Glasschaum, kombiniert werden. Erfindungsgemäss wird durch Nutzung der geringeren Dichte des Sekundärkorns die Werkstoffdichte zusätzlich verringert. Hierbei wird von dem Umstand, dass das Sekundärkorn wegen seiner geringeren Abmessung in der Kunststoff-Matrix eine geringere Bruchwahrscheinlichkeit als das Primärkorn hat, Gebrauch gemacht. Auch können sogenannte Schalenkörner vorzugsweise als Primärkorn eingesetzt werden. Sie bestehen aus einem grobporigen Kern und einer feinporigen oder sogar aus einer kompakten porenfreien Schale, die besonders bruchfest ist. Dadurch sind Werkstoffe mit besonders hoher Festigkeit herstellbar.

Ausser mineralischen Leichtgranulaten können auch metallische oder andere nichtmineralische Stoffe als Leichtgranulat eingesetzt werden. Als Beispiele für diese Werkstoffe seien genannt: duktile Metalle und Kunststoffe mit geringer offener Porosität, die sich unter Druck in der bereits gebildeten Packung verformen und so zu einer weiteren Erhöhung der Packungsdichte führen. Erfindungsgemäss sind Hohlkugeln aus Metall besonders geeignet, insbesondere im Einsatz als Primärkorn.

Die Verbindung der einzelnen Leichtgranulat-Partikel zu einem Festkörper erfolgt erfindungsgemäss mit Hilfe eines organischen Bindemittels. Geeignet für diesen Zweck sind unterschiedliche Klassen organischer Verbindungen in fliessfähiger Form. Die Bindemittel können in fester oder flüssiger Form, als Lösung oder auch als Suspension in das Granulatgemenge eingebracht und anschliessend durch geeignete Massnahmen, z.B. Entfernung von Lösungsmitteln, Zugabe von Polymerisationsbeschleunigern, Erhitzen zur Auslösung chemischer Reaktionen, gehärtet bzw. verfestigt werden.

Nach einer anderen Ausführungsform mischt man das Bindemittel dem Leichtgranulat in fester Form zu, überführt es in den flüssigen Aggregatzustand, gegebenenfalls bis zum Erreichen einer bestimmten Viskosität, lässt es das Haufwerk durchdringen und verfestigt es anschliessend wieder. Üblicherweise praktiziert man dieses Verfahren in der Weise, dass man das Bindemittel/Granulatgemisch bis zur Verflüssigung des Bindemittels erhitzt und anschliessend wieder abkühlt.

Im folgenden werden eine Anzahl geeigneter Bindemittel genannt. Diese Aufzählung ist keineswegs abschliessend gemeint, sondern gibt lediglich beispielhaft typische Vertreter verschiedener Verbindungsklassen an, die für die erfindungsgemässen Leichtbau-Werkstoffe als Bindemittel dienen können.

Zu geeigneten Bindemitteln gehören die Duroplaste, z.B. Epoxidharz, Polyurethan, Phenolharz, ungesättigte Polyester, Silikonharz.

Ferner haben sich Thermoplaste bewährt, beispielsweise Polyamid, Polyolefin, Polystyrol, PVC, Polyacetal, thermoplastische Polyester.

Weiterhin können als Bindemittel Elastomere eingesetzt werden, zu dieser Produktgruppe gehören z.B. Synthesekautschuk, Naturkautschuk, Silikonkautschuk.

Im allgemeinen sind die vorzugsweise kugelförmigen Granulate leichter als die Bindemittel, es können jedoch auch Granulate eingesetzt werden, die schwerer als das Bindemittel sind, sofern im Vordergrund der Werkstoffeigenschaft nicht sein geringes Gewicht, sondern hohe Tragfähigkeit, bei gleichzeitig hoher Duktilität stehen.

So konnten z.B. Traglager für schwere Maschinen und für Brücken aus dem erfindungsgemässen Werkstoff durch Verwendung von handelsüblichen Wälzlager-Kugeln und von PA 6 - Kunststoff als Komponenten mit Erfolg hergestellt werden. Diese Lager zeichnen sich durch gute Duktilität und sehr hohe Druckfestigkeit aus. Auch können Umlenkrollen für Seile von Liften, Bergbahnen, Kranen vorteilhaft erfindungsgemäss hergestellt werden. Auch eignen sich solche Werkstoffe als Lager von erdbebengefährdeten Häusern.

Durch Auswahl entsprechender Leichtgranulate und Bindemittel können die Eigenschaften des Leichtbau-Werkstoffs variiert und den individuellen Anforderungen des jeweiligen Einsatzgebietes angepasst werden. Es hat sich unter anderem herausgestellt, dass das Kraft-Weg-Diagramm durch den Aufbau der Packung modifiziert werden kann. Während z.B. bei der stets identischen reinen Kunststoffmatrix aus PA 6 einer Stauchung von z.B. 0,8 % eine Kraft von 7,5 N/mm$^2$ entspricht, beträgt die Kraft bei einer Packungsdichte von jeweils 50 % bei feinkörnigem KeraBims 12,5 N/mm2 und bei mittelkörnigem KeraPlus nur 1,5 N/mm2. Je nach Wahl des Leichtgranulats kann also die Druckfestigkeit einmal um 67% erhöht und ein anderes mal um 80% gesenkt werden. Die erfindungsgemässe Variation der Eigenschaften eines Kunststoffs in einem so grossen Bereich ist von Bedeutung bei allen unfallrelevanten Bauteilen in Fahrzeugen aller Art, aber auch in vielen anderen Teilen von Maschinen und Gebäuden.

Nicht zuletzt sind die erfindungsgemässen Leichtbau-Werkstoffe von herausragendem wirtschaftlichen Interesse. Da die mineralischen Füllkörper bezogen auf das Volumen nur etwa 1/10 soviel kosten, wie z.B. ein Bindemittel aus Kunststoff, können sehr preisgünstige Werkstücke geschaffen werden.

Hat z.B. das Leichtgranulat einen Anteil von 80 Vol-% und das Kunststoffbindemittel einen Anteil von 20 Vol-% am Werkstück, dann betragen die Rezepturkosten des Leichtbau-Werkstoffs bei einer Preisrelation Leichtgranulat: Kunststoff von 1:10 nur 0,8 x 1 plus 0,2 x 10 = 0,8 plus 2,0 = 2,8 statt 10 bei einem Werkstück aus 100% Kunststoff. D.h. bei dem Werkstück dieses Beispiels werden die Volumen-Rezepturkosten durch Anwendung der Erfindung um 72% gesenkt. Durch Erhöhung der Packungsdichte auf 97% und Reduktion des Kunststoffanteils auf 3% können die Kosten der Rezeptur sogar um 90% gesenkt werden.

Dieses Ergebnis ist deshalb von Bedeutung, weil durch die Erfindung zusätzlich auch das Gewicht des Werkstücks gesenkt wird. Im Fahrzeugbau gilt die allgemeine Regel, dass ein niedrigeres Gewicht immer durch höhere Materialpreise erkauft werden muss. Das Werkstück nach der vorliegenden Erfindung weicht von dieser Regel ab:

Das Leichtgranulat hat z.B. in dem oben genannten Beispiel eine Dichte von 110 g/l und der Kunststoff eine Dichte von 1100g/l. Das Gewichtsverhältnis Leichtgranulat. Kunststoff = 1 : 10. Das Gewicht des erfindungsgemässen Werkstücks wird in diesem Beispiel ebenso wie der Materialpreis um 72% gesenkt. Es gibt verschiedene, im Hinblick auf ihre Funktion vergleichbare Teile für Automobile, bei denen eine Überprüfung bereits ergab, dass tatsächlich das Gewicht auf 25 % bis 30 % der konventionellen Lösungen gesenkt werden konnte.

Dass im Leichtbau, wo weniger Gewicht stets mit höheren Kosten erkauft werden muss, sogar eine Kostenreduktion erzielbar ist, ist ein sehr wichtiges Ergebnis dieser wesentlichen erfindungsgemässen Leichtbau-Werkstoff-Innovation.

Dieses, den Fachmann überraschende Ergebnis, wird erfindungsgemäss durch Maximierung des Anteils der Packung einerseits und durch Minimierung der Verwendung von Bindemitteln, insbesondere von Kunststoff-Bindemitteln, andererseits erreicht. Diese beiden Massnahmen ergeben sowohl einzeln, besonders jedoch in der Kombination einen bislang nicht erwartbaren Fortschritt der Werkstofftechnik.

Durch Versuche konnte zur Überraschung von Werkstofftechnologen ferner festgestellt werden, dass der erfindungsgemässe Werkstoff bisher unbekannte Eigenschaften, unter anderem neuartige rheologische Eigenschaften aufweist. Selbst bei sehr hohen Druckkräften bleibt die Struktur der Leichtgranulate, zur Überraschung von Fachleuten, bei der Stauchung, z.B. bei der Anwendung als Crash-Absober, lange Zeit erhalten, während das Kunststoff-Bindemittel in einen Fliesszustand versetzt wird und dabei regelrecht zum Fliessen durch die aus den Füllkörpern gebildete Packung gezwungen wird.

Die rheologischen Eigenschaften können erfindungsgemäss durch spezielle Ausbildung der Packung beeinflusst werden. Durch bestimmte geometrische räumliche Packungen und durch Leichtgranulate können Werkstoffkombinationen mit bestimmten Druckfestigkeiten und bestimmten Oberflächenstrukturen geschaffen werden, die für die Anwendung in Werkstücken mit unterschiedlichen Funktionen wie Kraftabsorption durch Verformung, Schallabsorption, Biegekräfte- und Zugkräfte-Aufnahme und Druckkraft-Aufnahme etc. in besonderer Weise geeignet sind.

So stellte sich bei Versuchen beispielsweise heraus, dass die erfindungsgemässen Werkstücke nicht nur ausgezeichnete Eigenschaften als Crash-Absorber und als andere crash-relevante Teile von Kraftfahrzeugen aufweisen, sondern dass man geradezu massgeschneiderte Unfallschutzlösungen mit Hilfe der erfindungsgemässen Leichtbau-Werkstoffe zusammenstellen kann. Zur Überraschung von Fachleuten konnte so der Unffallschutz wesentlich verbessert werden. Hierbei wurden Leichtgranulate mit geringerer Druckfestigkeit gewählt, die zu Werkstoffen führten, die im Vergleich zu menschlichen Körperteilen wie z.B. dem Schädel, geringere Druckfestigkeiten aufweisen und so im Fall eines Unfalls Schädelfrakturen verhindern und dadurch die Überlebenschancen beim Unfall erhöhen.

Durch Kombination von den erfindungsgemässen Werkstoffen für den Crash-Schutz und den erfindungsgemässen Werkstoffen für den Personenschutz konnten schliesslich für den Fussgängerschutz geeignete Werkstücke wie z.B. Motorhauben konzipiert werden, die je nach Aufschlagstelle des Unfallopfers und je nach den darunter befindlichen gefährdenden Bauteilen (Vermeidung eines Schädelaufschlags auf harte Teile wie Motor, Batterie, Federbeine) ein Produkt mit massgeschneiderten unterschiedlichen Druckfestigkeiten ermöglichen.

Nach dem Vorschlag der EU-Kommision für Fahrzeugsicherheit (EEVC) sollen Vorschriften zum Schutz von Fussgängern erlassen werden. Nach diesen Vorschriften, dürfen Unfälle bei bestimmten Geschwindigkeiten für den Fussgänger nicht mehr tödlich ausgehen. Diese Forderung kann durch die vorliegende Erfindung dadurch erfüllt werden, dass oberhalb von Motor, Batterie, Federbeinen und anderen "harten" Teilen und unterhalb der Motorhaube Kissen aus den erfindungsgemässen Leichtbau-Werkstoff angebracht werden und dass die Druckfestigkeit der Kissen so eingestellt wird, dass die Anforderungen erfüllt werden. Das ist z.B. dann der Fall, wenn die Druckfestigkeit von Kissen plus Motorhaube geringer ist, als die Druckfestigkeit des aufschlagenden Körperteils. Alternativ kann diese Forderung dadurch erfüllt werden, dass die komplette Motorhaube aus dem Leichtbau-Werkstoff besteht und dass über "harten" Teilen die Stärke der Motorhaube vorzugsweise nach Innen erhöht wird und sie dort zur Kissenbildung mit Leichtbaugranulaten vorzugsweise im Bereich unterhalb von 100 g/l gefüllt werden, während in den übrigen Bereichen schwerere Granulate zum Einsatz kommen.

Die Leichtbau-Werkstoffe der vorliegenden Erfindung können als solche eingesetzt werden. Es ist aber auch möglich diese partiell oder allseits mit Oberflächen aus Folien, Blechen und strangförmigen Hohlprofilen bzw. sonstige Hohlprofile aus Stahl, Edelstahl, Faser-Laminaten und Kunststoff zu versehen. Derartige mit Oberflächen ausgerüstete Leichtbau-Werkstoffe ergeben Werkstücke mit sehr hoher Festigkeit.

Eine weitere Anwendung der Erfindung ist die Aussteifung von Rahmen, insbesondere Fahrzeugrahmen, A-, B-, oder C-Säulen, von Gussteilen, insbesondere sehr dünnwandigen grossflächigen Gussteilen aus Aluminium oder Magnesium, wie Kofferraumdeckel, Türen oder Motorhauben.

Weiterhin kann die Erfindung bei der Herstellung von Flachprodukten für den Einsatz als Fussböden für Züge, Strassenbahnen, Omnibussen, Caravans und Lastkraftwagen inklusive Anhänger eingesetzt werden. Hier stehen insbesondere das geringe Gewicht und die Robustheit, die Crash-Sicherheit und die Verschleissfestigkeit des erfindungsgemässen Werkstoffes im Vordergrund.

Wegen der hohen Haltbarkeit und Unverrottbarkeit der erfindungsgemässen Leichtbau-Werkstoffe eignen sie sich auch für den Einsatz im Baugewerbe, wobei Konstruktionsteile wie Dachunterplatten von besonderem Interesse sind, die multifunktional die derzeitigen Funktionen des Dachstuhls, der Schalung, der Dachhaut, der Lattung und/oder der Wärmedämmung übernehmen können und die ferner besonders montagefreundlich sind.

Eine weitere Anwendung der Erfindung betrifft die Herstellung von sehr leichten und robusten Betonier-Schalungen für Bauwerke und von Gerüsten und deren Bodenbretter für das Baugewerbe.

Als weitere Bestandteile für die erfindungsgemässen Leichtbau-Werkstoffe haben sich kurz- oder langfaserige Verstärkungsfasern bewährt.

Ein weiterer Gegenstand der vorliegenden Erfindung ist die Bereitstellung eines neuen Verbundwerkstoffes. Der erfindungsgemässe Verbundwerkstoff umfasst einen Kern aus einem Leichtbau-Werkstoff, vorzugsweise aus dem oben beschriebenen Leichtbau-Werkstoff und eine den Kern vollständig oder teilweise umgebenden Oberfläche aus Stahl, Edelstahl, Faser-Laminaten oder Kunststoff.

Bekanntlich weisen Verbundwerkstoffe, die eine oder mehrere Komponenten aus Kunststoff enthalten, ein unterschiedliches Wärmeausdehnungsverhalten der einzelnen Komponenten auf. Es wird durch die unterschiedlichen Stoffeigenschaften von Kunststoff im Vergleich zu Metall und anderen Komponenten verursacht. Dabei ist z.B. die Wärmeausdehnung von Kunststoffen etwa um zwei Zehnerpotenzen höher als die von Metall. Darüberhinaus werden Kunstoffe bei Temperaturen von über 200° C geformt und weisen bei der Abkühlung einen Schwund von ca. bis zu 10% auf. Diese ungünstigen Eigenschaften schränken den Einsatz von den bekannten Verbundwerkstoffen ein.

Im Gegensatz zu den bekannten Verbundwerkstoffen weisen die erfindungsgemässen Verbundwerkstoffe keine vergleichbare Wärmeausdehnung auf und weisen, insbesondere bei einem Leichtgranulatanteil von 55-90 Vol-% in dem Leichtbau-Werkstoff Wärmekoeffizienten auf, die im Bereich von Aluminium bis Stahl liegen. Der Wärmekoeffizient ist hierbei durch die Packungsdichte, den Korn- und Packungsaufbau des Leichtgranulats einstellbar.

Ferner hat sich herausgestellt, dass bei einer Packungsdichte des Leichtgranulats von 55 bis 90 Vol-% der Schwund der Kunststoffmatrix vollständig oder fast vollständig eliminiert wird. So wird beispielsweise beim Guss von PA6 bei einer Giess- und Polymerisationstemperatur von ca. 160 °C ohne Leichtgranulat ein Schwund von 6% festgestellt, bei einer Packungsdichte des Leichtgranulats von 70 Vol-% dagegen ein Schwund von unter 0,5 %.

Da die erfindungsgemässen Verbundwerkstoffe keinen oder fast keinen Schwund aufweisen erübrigt sich auch in den meisten Fällen, das nach dem Guss erforderliche mehrstündige Tempern. Dadurch werden nicht nur die Kosten erheblich gesenkt, sondern durch Verkürzung der Herstellungszeiten von 10 bis 24 Stunden auf wenige Minuten erstmals der Einsatz von Gusswerkstoffen in der Massenfertigung z.B. von grossen Automobilteilen, möglich.

Die erfindungsgemäßen Leichtbau-Werstoffe werden wie folgt hergestellt: Einbringen des Leichtgranulats in eine Werkstückform, gegebenenfalls Erwärmen des Leichtgranulathaufwerks, Einbringen des Bindemittels in die mit dem Leichtgranulathaufwerk gefüllte Werkstückform, Verfestigen des Bindemittels.

Zur Erzielung optimaler Packungsdichten werden Partikel unterschiedlicher Korngrösse aufeinanderfolgend in solch einer Weise in die Form eingebracht, dass man mit dem grössten Korn beginnt. Anschließend lässt man das zweitgrösste Korn einfliessen. Jeder dieser Schritte wird durch Massnahmen zur Verdichtung des Haufwerks unterstützt. Geeignet hierfür sind z.B. Rütteln, Behandlung mit Ultraschall oder Vibration und/oder durch Anwendung von Unterdruck oder Überdruck.

Jede dieser Massnahmen verkürzt nicht nur die Füllzeit in die Form erheblich sondern erhöht gleichzeitig die Packungsdichte erheblich.

Sobald die Form vollständig mit den Leichtgranulaten mit grösstem Durchmesser (Primärkorn) gefüllt ist, wird dieser Vorgang im Falle eines zusätzlichen Sekundärkorns wiederholt. Mit dem Sekundärkorn werden durch diesen Vorgang die zwischen den Primärkörnern entstandenen Hohlräume aufgefüllt.

Es hat sich hierbei gezeigt, das der Vorgang der Bildung eines Leichtgranulathaufwerks sehr einfach und präzise automatisiert werden kann. Unter Einsatz eines zusätzlichen Kernbindungsmittel ist es möglich zunächst extern, d.h. nicht in der eigentlichen Werkstückform, Infiltrationskerne aus dem Leichtgranulathaufwerk herzustellen. Zu diesem Zweck kann das Leichtgranulat bereits vor der Kernbildung mit einem geeigneten Bindemittel benetzt werden. Der so extern hergestellte und gebundene Kern wird vorzugsweise mittels eines Roboters in die Werkstückform eingelegt und anschliessend auf bereits beschriebene Weise mit dem Bindemittel infiltriert.

Bei dem Einfüllen des Leichtgranulats bzw. des Bindemittels in die Werkstückform ist die richtige Füllgeschwindigkeit von entscheidender Bedeutung. Der Leichtgranulatstrom ist so zu bemessen, dass eine noch gleichmässig fliessende Füllfront in der Form aufrecht erhalten wird. Gleichermassen wird eine gleichmässig fliessende Füllfront für die Bemessung des Bindemittelstroms zugrunde gelegt.

In vorliegendem Fall ist ein gleichmässig fliessender Bindemittelstrom deshalb besonders wichtig, weil das Bindemittel eine um das 10-fache höhere Dichte als das Leichtgranulat hat und ein Bindemittelstau ein Aufschwimmen des Granulats bewirken würde, was zu Unregelmässigkeiten in der Packung führen kann.

Vorzugsweise werden vor dem Einfüllen der Materialien die Werkstückform und/oder das Leichtgranulat und/oder das Bindemittel erwärmt.

Nachstehend wird die Erfindung anhand von Beispielen und Zeichnungen beschrieben. Sie ist selbstverständlich nicht auf diese Ausführungsformen beschränkt.

Es zeigt:

Fig. 1        Eine typische Struktur des erfindungsgemässen Leichtbau-Werkstoffs mit Primär- und Sekundärkorn,

Fig. 2        eine typische Struktur des erfindungsgemässen Leichtbau-Werkstoffs mit Primär-, Sekundär- und Tertiärkorn,

Fig. 3        eine Ausschnittvergrösserung des Leichtbau-Werkstoffes aus Fig. 2,

Fig. 4        einen Crash-Absorber hergestellt unter Verwendung des erfindungsgemässen Leichtbau-Werkstoffs,

Fig. 5        ein Kraft-Weg-Diagramm für einen Kunstoff und verschiedene erfindungsgemässe Leichtbau-Werkstoffe,

Fig. 6        einen herkömmlichen Überrollbügel für ein Kraftfahrzeug,

Fig. 7        einen Überrollbügel für ein Kraftfahrzeug, hergestellt unter Verwendung des erfindungsgemässen Leichtbau-Werkstoffs

Fig. 8          eine konventionelle Leitplanke,

Fig. 9          eine Leitplanke, hergestellt unter Verwendung des erfindungsgemässen Leichtbau-Werkstoffs,

Fig. 10         eine Hecktür eines Lieferwagens, hergestellt unter Verwendung des erfindungsgemässen Leichtbau-Werkstoffs,

Fig. 11         eine Radkappe, hergestellt unter Verwendung des erfindungsgemässen Leichtbau-Werkstoffes,

Fig. 12         ein Fahrwerksteil eines Kraftfahrzeugs, hergestellt unter Verwendung des erfindungsgemässen Leichtbau-Werkstoffs,

Fig. 13         eine Motorhaube für ein Kraftfahrzeug,

Fig. 14         eine Motorhaube für ein Kraftfahrzeug, hergestellt unter Verwendung des erfindungsgemässen Leichtbau-Werkstoffs

Fig. 15-17      Vergrösserungen bestimmter Bereiche der in Fig. 14 dargestellten Motorhaube, teilweise im Schnitt,

Fig. 18         eine Rahmenhälfte eines herkömmlichen Kraftfahrzeugrahmens,

Fig. 19         eine Rahmenhälfte eines Kraftfahrzeugrahmens, hergestellt unter Verwendung des erfindungsgemässen Leichtbau-Werkstoffs

Fig. 20,        eine Bodengruppe eines Kraftfahrzeuges

Fig. 21         eine Bodengruppe eines Kraftfahrzeugs, hergestellt unter Verwendung des erfindungsgemässen Leichtbau-Werkstoffs,

Fig. 22         eine Seite eines Lieferwagens, hergestellt unter Verwendung des erfindungsgemässen Leichtbau-Werkstoffs,

Fig. 23         Verstärkungsmassnahmen für den in Fig. 22 dargestellten Lieferwagen,

Fig. 24         ein Fahrradrahmen, hergestellt unter Verwendung des erfindungsgemässen Leichtbau-Werkstoffs,

Fig. 25         eine Beton- Schalung, hergestellt unter Verwendung des erfindungsgemässen Leichtbau-Werkstoffs, und

Fig. 26-28      Teile eines Baugerüstes, hergestellt unter Verwendung des erfindungsgemässen Leichtbau-Werkstoffs.

Im folgenden werden nachstehend verwendete Begriffe nochmals definiert:

Mit dem Begriff Primärkorn wird die grösste Korngruppe der Packung bezeichnet.
Mit Sekundärkorn wird die zweitgrösste Korngruppe der Packung bezeichnet.
Mit Tertiärkorn wird die drittgrösste Korngruppe der Packung bezeichnet.

Es können erfindungsgemäss folgende Packungsdichten erreicht werden:

| Beschreibung des Packungsaufbaus (Volumen-%) | | Packungsdichte |
|---|---|---|
| 1. | Maximale Korngrösse (Primärkorn), Abweichung Korngrösse max. +/- 6% Abweichung von der Kugelform +/- 4% | 66 % |
| 2. | Wie 1., zusätzlich mit Sekundärkörnern 1/10 der Primärkorn-Grösse, gleiche Abweichungstoleranzen | 86 % |

(fortgesetzt)

| Beschreibung des Packungsaufbaus (Volumen-%) | | Packungsdichte |
|---|---|---|
| 3. | Wie 2., zusätzlich mit Tertiärkörnern maximale 1/100 der Primärkorn-Grösse gleiche Abweichungstoleranzen | 94 % |

Erfindungsgemäss wird ein Sekundärkorn mit einer Korngrösse zwischen 1/6 und 1/12 des Monokorns eingesetzt. Ein eventuelles Tertiärkorn hat wiederum 1/6 bis 1/18 der Korngrösse des Sekundärkorns.

Ein erfindungsgemässer Aufbau von Packungen nach den Beispielen 1 bis 3 bei einer Stufung der Korngrössen um den Faktor 1/10 und bei den Korngrössen von 12 mm, 1,2 mm und 0,12 mm ergab folgende Packungsdichten:

(P-Korn = Primärkorn, S-Korn = Sekundärkorn, T-Korn = Tertiärkorn)

| Beispiel | Packungsdichte/Kunststoffanteil |
|---|---|
| 1. 66 % P-Korn | 66 % Packung + 34 % Kunststoff |
| 2. 66% P-Korn + 20 % S-Korn | 86 % Packung + 14 % Kunststoff |
| 3. 66% P-Korn + 20 % S-Korn + 8 % T-Korn | 94 % Packung + 6 % Kunststoff |

Dieser Vorgang kann darüber hinaus durch ein Quatärkorn fortgesetzt werden.

Entscheidend für die Qualität des Leichtbau-Werkstoffs ist der durch die Erfindung erzielbare reduzierte Kunststoffanteil. Er kann entsprechend der Erfindung durch die Einführung jeweils eines weiteren Unterkorns bei einem Faktor 1/10 betreffend der Kornstufung, die sich in der Praxis als zweckmässig erwies, halbiert werden.

Das führt zu bisher unerreichten weiteren Vorteilen bezüglich geringerer Dichte und niedrigerer Preise für die Rohstoffmischung.

Das folgende Beispiel wurde für die nachfolgenden zur Zeit durchschnittlichen Preise errechnet: Dichte: Korn 1: 110 g/l, Korn 2: 50 g/l, Kunststoff 1,100 g/l, Preise: Granulat DM 1,00/l, Kunststoff DM 10,000/l

| Beispiel | Dichte (kg/l) Korn 1 | Dichte (kg/l) Korn 2 | Rohstoffpreis (DM/l) |
|---|---|---|---|
| 1. | 447 | 407 | 4,06 |
| 2. | 249 | 197 | 2,26 |
| 3. | 169 | 113 | 1,54 |

Bei einem grossen Werkstück, z.B. einer Leitplanke, kann demnach durch Verwendung eines sehr grossen Primärkorns und eines Sekundärkorns, eines Tertiärkorns und eines Quatärkorns eine besonders herausragende Lösung erreicht werden: Kunststoffanteil 3 %; Dichte unter 0,1 kg/l; Preis rd. DM 1,00/l.

Wie bereits beschrieben weisen die mineralischen Leichtgranulate erfindungsgemäss in der Packung eine gestufte Verteilung der Korngrössen auf. Das Primärkorn wird entsprechend der Geometrie des Werkstücks bestimmt und hat vorzugsweise mit mehr als 50 Vol-% den grössten Anteil am Volumen des Werkstücks.

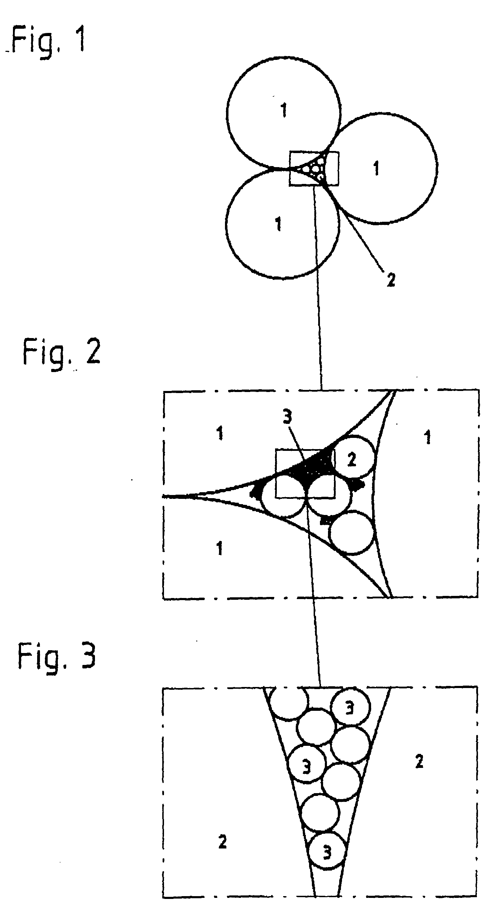

Die Struktur eines erfindungsgemässen Leichtbau-Werkstoffs ist in Fig. 1 bis 3 dargestellt. Hierbei zeigt Fig. 1 den Aufbau eines Werkstoffes hergestellt unter Verwendung von Primär 1 - und Sekundärkörnern 2. Die Packung des Leichtgranulates in dem Werkstoff wird zunächst von den einzelnen runden bzw. nahezu runden

Primärkörnern 1 bestimmt, die sich aneinander bzw. auf-und untereinander lagern, so dass zwischen den einzelnen Körnern Hohlräume entstehen. In diesen Hohlräumen lagern sich dann die Sekundärkörner 2 ab, um eine möglichst dichte Packung des Leichtgranulats in dem Werkstoff zu erzielen. Auf diese Weise ist es möglich den benötigten Bindemittelanteil zu reduzieren, da nur noch die Hohlräume zwischen den Sekundärkörnern und zwischen den Sekundär- und Primärkörnern aufgefüllt werden müssen.

Eine noch dichtere Packung des Leichtgranulats ist in Fig. 2 und 3 dargestellt. Hierbei handelt es sich um ein Granulat umfassend Primär 1 -, Sekundär 2 - und Tertiär 3 - Körner. Ausgehend von der in Fig. 1 dargestellten Struktur werden noch die zwischen den Sekundärkörnern 2 und zwischen den Sekundär 2 - und Primärkörnern 1 gebildeten Hohlräume mit Tertiärkörnern 3 aufgefüllt. Der dem Bindemittel zu Verfügung stehende Raum wird folglich noch weiter verringert.

Die so gebildeten Packungen aus Primär- und Sekundär-, bzw. Primär-, Sekundär- und Tertiärkörnern werden anschliessend durch Kunststoff guter Fliessfähigkeit gefügedicht infiltriert.

Bei Kraftfahrzeugen können mit dem erfindungsgemässen Werkstoff z.B. Crash-Absorber mit definierter und sogar variabler Kraft-Weg Charakteristik erstmals realisiert werden.

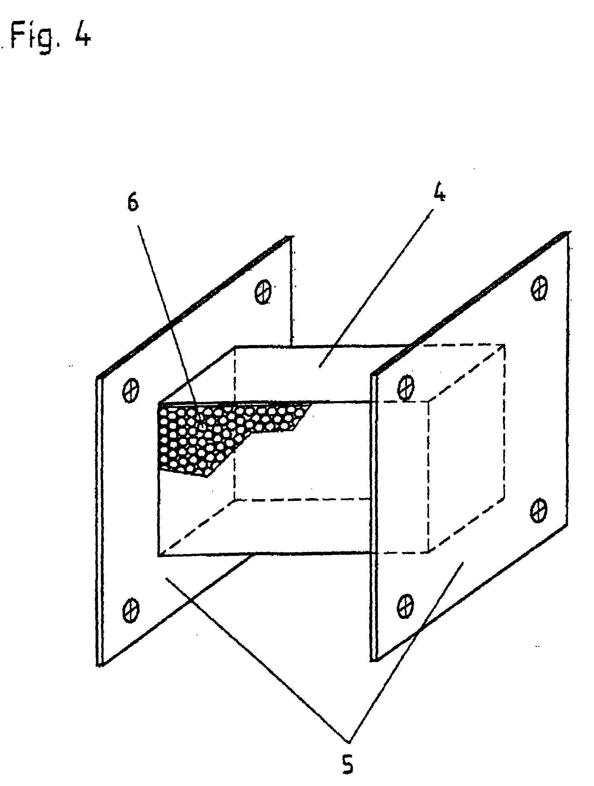

In Fig. 4 ist ein solcher Crash-Absorber dargestellt, der zwischen der Stossstange und dem Rahmen eines Kraftfahrzeuges eingebaut wird. Er kann, wie in Fig. 4 dargestellt ist, aus einer runden oder rechteckigen umhüllenden Oberfläche 4 mit Flanschen 5 und einer Füllung aus dem erfindungsgemässen Leichtbau-Werkstoff 6 hergestellt werden. Alternativ wäre es auch möglich den ganzen Crash-Absorber aus dem erfindungsgemässen Material herzustellen.

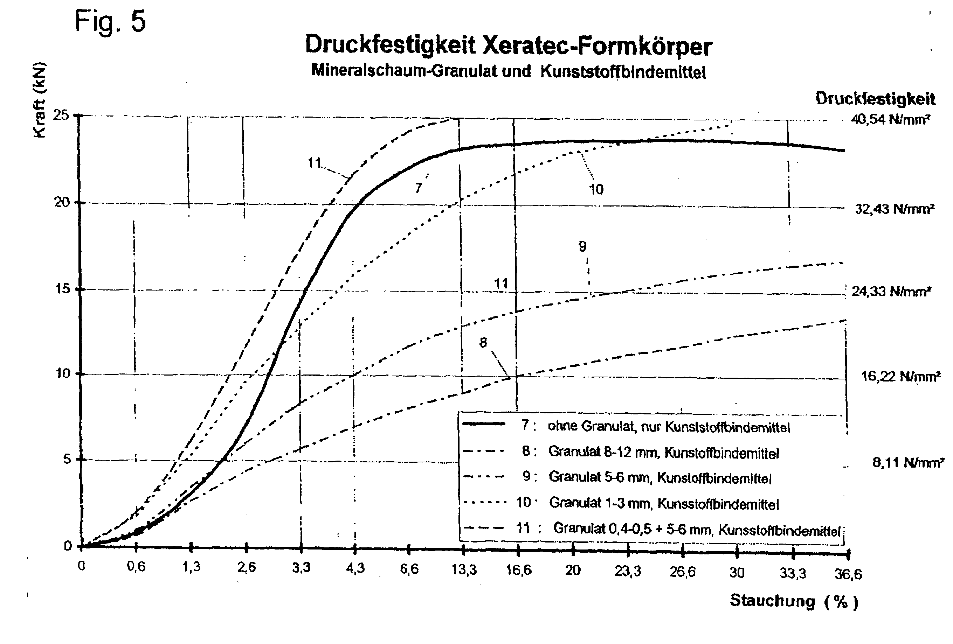

Fig. 5 stellt beispielhaft ein Kraft-Weg Diagramm aus Versuchen mit dem erfindungsgemässen Material dar. Je nach Aufbau der Packung des Leichtgranulats in dem erfindungsgemässen Werkstoff lassen sich in Abhängigkeit von der Stauchung unterschiedliche Weg-Kraft-Verhältnisse allein durch den Packungsaufbau einstellen.

Hierbei zeigt die Kurve 7 das Verhalten des Kunststoffes ohne Zusatz von Leichtgranulat, diese Kurve dient als Referenzkurve. Die Kurve 8 kann erzielt werden, wenn der für die Kurve 7 verwendete Kunststoff mit einem Leichtgranulat im Korngrössenbereich von 8 bis 12 mm gefüllt wird. Man erkennt, dass bei einem relativ grossen Primärkorn die Druckkraft niedriger ist als bei einem ungefüllten Kunststoff. Die in Kurve 9 dargestellten Werte können erhalten werden, wenn der Referenzkunststoff mit Leichtgranulat der Korngrösse 5 bis 6 mm gefüllt wird. Im Vergleich zu der Kurve 8 ist hier eine deutliche Erhöhung der Druckkraft festzustellen. Eine weitere Erhöhung der Druckkraft kann, wie in Kurve 10 dargestellt durch die Verwendung eines Leichtgranulats mit einer Korngrösse von 1 bis 2 mm erzielt werden.

Die Kurve 11 zeigt schliesslich die Kraft-Weg-Kurve, die sich einstellt, wenn eine Leichtgranulatkombination von Primärkörnern der Korngruppe 5 bis 6 mm und Sekundärkörner der Korngruppe 0,5 bis 0,6 mm verwendet werden. Diese Ergebniss macht deutlich, dass der Fachmann mit Hilfe des erfindungsgemässen Leichtbau-Werkstoffs nach Belieben durch Veränderung der Leichtgranulatpackung Werkstoffe erzeugen kann, die sowohl eine geringere als auch eine höhere Druckkraft aufweisen, als der ungefüllte Referenzkunststoff.

Fig. 5 zeigt somit, dass sich durch die Variation von Packungsdichte und Korngruppen-Zusammensetzung Modulationen der Druckfestigkeit in einem erheblichen Umfang erzielen lassen. Darüber hinaus verdeutlicht Fig. 5, dass durch den erfindungsgemässen Leichtbau-Werkstoff im Bereich geringer Stauchung die meist unerwünschte Kriechneigung von Kunststoffen unter Last, bei vergleichbaren Bedingungen, auf etwa die Hälfte des Kriechweges abgesenkt werden kann. Dies ist ein wesentlicher Vorteil der vorliegenden Erfindung. Auch im Bereich sehr hoher spezifischer Last kann durch den Packungsaufbau der Kriechweg stark reduziert werden. Die Reduzierungsmöglichkeit wird hierbei nur durch die Kornfestigkeit begrenzt. Die Erfindung ermöglicht es folglich, Körper mit sehr hohen Druckfestigkeiten, z.B. Kugellagerkugeln zur Herstellung von praktisch nicht kriechenden Kunststoffen und Naturkautschuken zu verwenden.

Ferner kann erstmals mit dem erfindungsgemässen Leichtbau-Werkstoff das gesamte oder zumindestens ein Teil des Fahrzeugs so gebaut und gestaltet werden, dass alle oder fast alle Teile des Fahrzeugs an der Energieabsorption mitwirken und damit zu einem wesentlich verbesserten Unfallschutz beitragen. Diese Energieabsorption wird durch den Fluss der duktilen Kunststoffmatrix zwischen den kugelförmigen Leichtgranulaten bewirkt. Der Kunststoff verhält sich folglich wie eine höchstviskose dämpfende Flüssigkeit.

Die Möglichkeiten, die sich aus dem erfindungsgemässen energieabsorbierenden Leichtbau-Werkstoff ergeben, werden durch folgende Beispiele näher erläutert:

Omnibusse, Lastkraftwagen, Traktoren und Gelädewagen sind wegen ihrer hohen Schwerpunkte umsturzgefährdet. Für sie können mit dem erfindungsgemässen Werkstoff leichtgewichtige Überrollbügel hergestellt werden, die die bisherigen Konstruktionen im Hinblick auf die Knicksicherheit weit übertreffen, jedoch keine Erhöhung von Fahrzeuggewicht und -schwerpunkt nach sich ziehen.

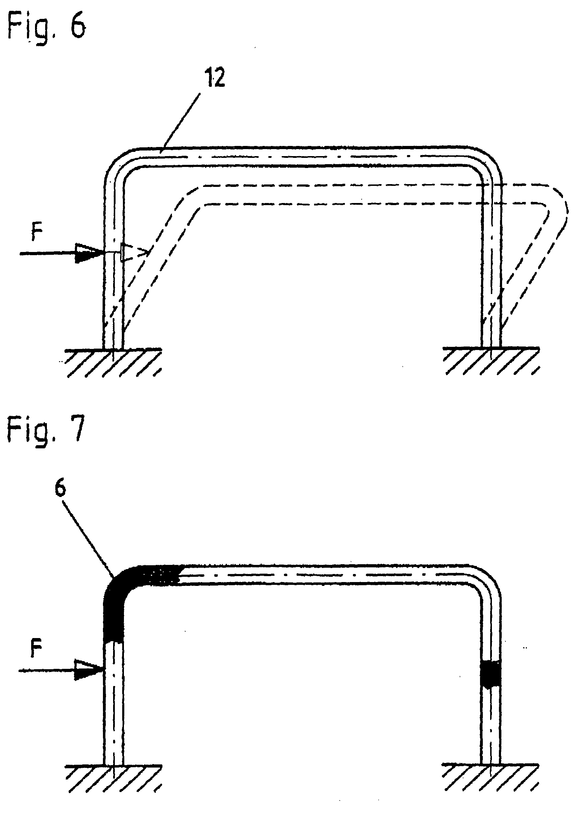

In Fig. 6 und 7 ist ein Überrollbügel 12 für einen Geländewagen dargestellt. Fig. 6 zeigt hierbei einen handelsüblichen Überrollbügel 12, der nicht durch den erfindungsgemässen Leichtbau-Werkstoff verstärkt ist. Dieser Bügel kann bei einem Unfall der Kraft "F" nicht standhalten und verformt sich beispielsweise beim Überrollen des Fahrzeuges so sehr, dass ein Insassenschutz nicht mehr gewährleistet ist. Fig. 7 zeigt im Gegensatz dazu einen mit dem erfindungsgemässen Leichtbau-Werkstoff 6 verstärkten Bügel 12, der der Kraft "F" standhält. Durch die Kombination eines dünnen Aussenrohres aus hochfestem Metall und einer Ausfüllung desselben mit dem erfindungsgemässen Leichtbau-Werkstoff wird hier ein knicksicherer und sehr leichter Überrollbügel geschaffen.

Bei stationären Verkehrseinrichtungen wie bei Leitplanken, Brückengeländern und anderen Begrenzungseinrichtungen, z.B. auch auf Flughäfen, können mit dem erfindungsgemässen Leichtbau-Werkstoff Lösungen realisiert werden, die den Stand der Technik wesentlich verbessern. So haben z.B. Leitplanken aus Stahl einerseits den Vorteil, dass sie Energie absorbieren können, andererseits aber den Nachteil, dass sie das Fahrzeug nicht zuverlässig leiten können, sondern es im Gegenteil auf die Fahrbahn zurückschleudern. Leitplanken aus Beton weisen diesen Nachteil des Zurückschleuderns zwar nicht auf, können dafür jedoch keine Energie absobieren.

Leitplanken aus dem erfindungsgemässen Werkstoff können erstmals zu vertretbaren Kosten beide Aufgaben, die Energieabsorption und die Fahrzeugleitung erfüllen.

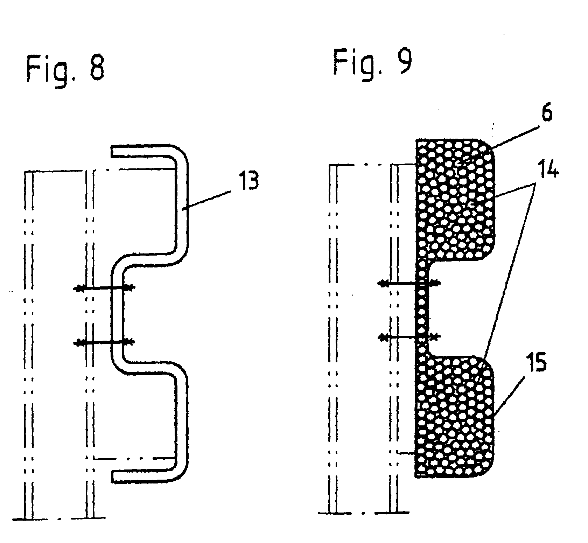

Fig. 8 zeigt eine konventionelle Leitplanke 13, wie sie derzeit im Strassenwesen zum Einsatz kommt. Diese Leitplanke besteht aus 3 mm verzinktem Stahlblech. In Fig. 9 ist eine unter Verwendung des erfindungsgemässen Leichtbau-Werkstoffes 6 hergestellte Leitplanke 14 dargestellt. Diese Leitplanke umfasst eine nur etwa 0,5 mm starke Aussenhaut 15 aus Metall oder Kunststoff und einen Kern aus dem erfindungsgemässen Leichtbau-Werkstoff 6 mit sehr hoher Packungsdichte und sehr hohem Energieabsorptionsvermögen. Eine solchermassen aufgebaute Leitplanke kann das Fahrzeug leiten, ohne es zurückzuschleudern. Sie ist ferner stirnseitig stumpf und neigt nicht dazu schwere Fahrzeuge, wie Busse, aufzuschlitzen.

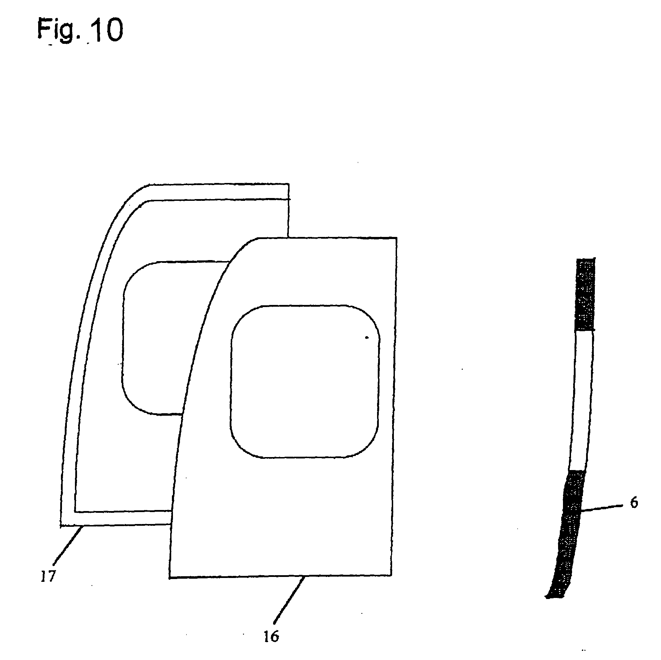

Des weiteren ist in Fig. 10 eine Hecktür eines Lieferwagens dargestellt. Hier wird der Hohlraum zwischen Aussenschale 16 und Innenschale 17 mit dem erfindungsgemässen Leichtbau-Werkstoff 6 gefüllt. Dadurch entfallen die bisher notwendigen versteifenden Einbauten. Die erfindungsgemässe Tür neigt nicht zum Dröhnen, weil sie durch den Leichtbau-Werkstoff gut gedämpft ist. Sie gewährt ferner einen besseren Crash-Schutz.

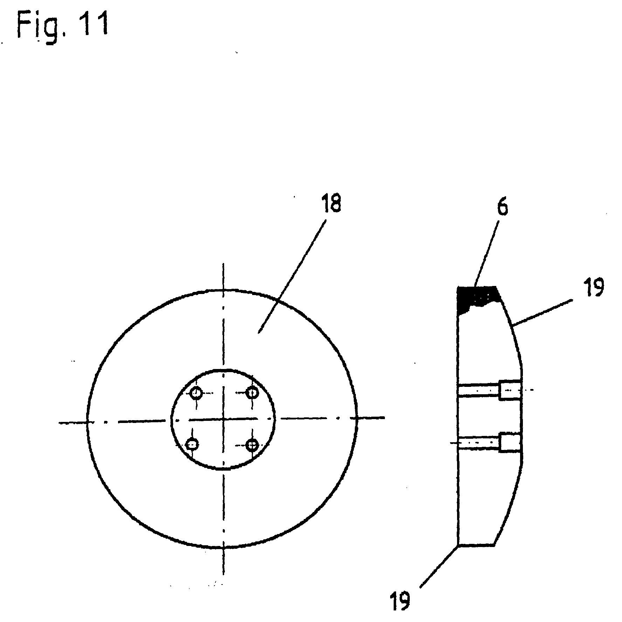

Fig. 11 zeigt eine Radkappe 18, die neben der Funktion der Dekoration auch die Funktion des Unfallschutzes erfüllt. Die Radkappe besteht aus einer dekorativen Schale 19 und einem Kern 6 aus dem erfindungsgemässen Leichtbau-Werkstoff. Fussgänger, die sich bei einem Unfall sonst an den rotierenden Muttern oder einer anderen Unebenheit eines Rades stossen würden, können durch diese Ausformung der Radkappe vor Verletzungen geschützt werden.

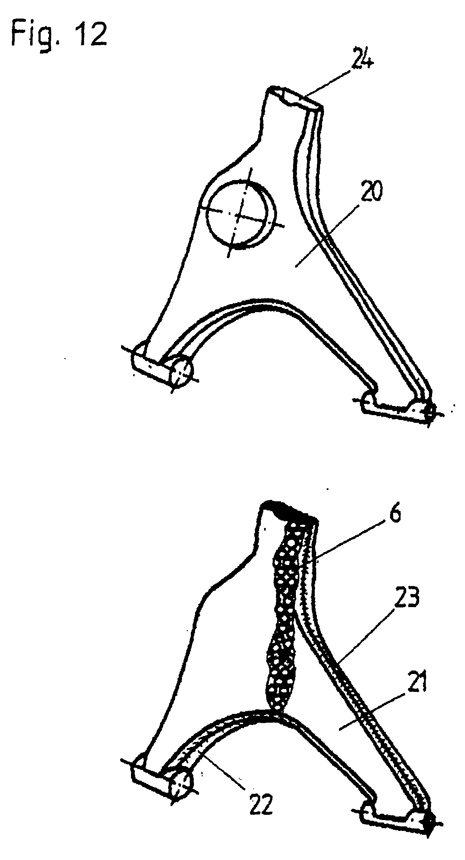

In Fig. 12 ist ein mit dem erfindungsgemässen Leichtbau-Werkstoff 6 gefülltes Fahrwerksteil 20 eines Kraftfahrzeuges dargestellt. Solche Teile werden nach dem Stand der Technik aus Blechhalbschalen 21, 22 hergestellt, die über eine Schweissnaht 23 miteinander verbunden werden. Es ist wegen der Knickfestigkeit erforderlich, die Blech-Halbschalen überzudimensionieren. Der verbleibende Hohlraum verstärkt Dröhngeräusche, was sekundäre Dämpfungsmassnahmen erforderlich macht.

In der baugleichen Ausführung unter Verwendung des erfindungsgemässen Leichtbau-Werkstoffes, d.h. mit einer Füllung aus dem Leichtbau-Werkstoff, ist es möglich, eine geringere Wandstärke zu erzielen und gleichzeitig das Gewicht des Fahrwerkteils zu reduzieren, sowie die Geräusche wirkungsvoll zu dämpfen. Fig. 12 zeigt ferner die Gelenke 23 des Fahrwerkteils, das erfindungsgemäss mit dem Leichtbau-Werkstoff 6 über Öffnung 24 gefüllt wird.

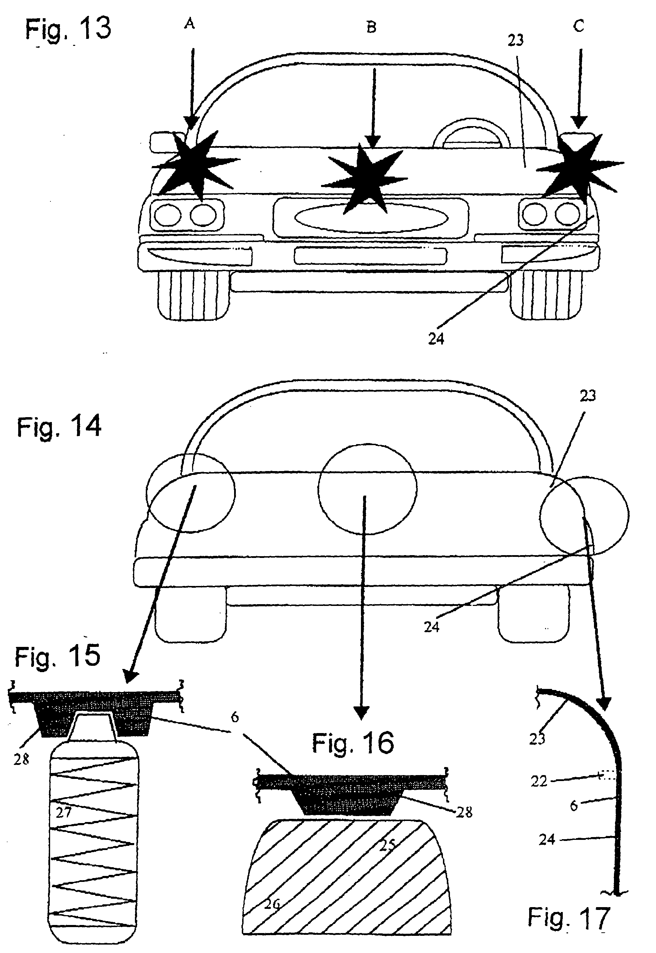

Fig. 13 zeigt beispielhaft eine Ausführungsform einer Motorhaube eines Kraftfahrzeugs. Die drei Pfeile A,B, C markieren hierbei die Stellen, die für einen Passanten während eines möglichen Aufpralls am gefährlichsten sind, d.h. die Positionen an denen ein Fussgänger "hart" aufschlagen könnte. Der Pfeil A markiert hierbei die Gefährdung durch ein Federbein, das beim Aufschlagen eines Kopfes als "harter" Widerstand zu Schäden führen kann. Pfeil B gibt die Lage der "harten" Widerstände Motor bzw. Batterie an. Ferner bezeichnet Pfeil C den harten Widerstand am Übergang zwischen Motorhaube und Kotflügel. Weitere harte Widerstände stellen die inneren Metall-Versteifungen der Motorhaube dar.

Um diese erheblichen Gefahrenquellen zu eliminieren wird in den Fig. 14-17 eine mögliche Ausführungsform der Motorhaube unter Einsatz der vorliegenden Erfindung teilweise im Schnitt dargestellt. Hierbei wird die Motorhaube und vorzugsweise auch die Kotflügel vollständig und ohne konstruktiv bedingte Verstärkungen 22 aus dem erfindungsgemässen Leichtbau-Werkstoff 6 hergestellt und erhalten, wenn gewünscht, eine dekorative Oberfläche z.B. bestehen aus einer Metallfolie. Motorhaube 23 und Kotflügel 24 werden aus dem erfindungsgemässen Material mit mittlerer Druckfestigkeit hergestellt.

In die Motorhaube werden insbesondere an den bezeichneten gefährlichen Stellen z.B. über dem Motor 25 bzw. über der Batterie 26 bzw. über dem Federbein 27 Crash-Pads 28 aus dem erfindungsgemässen Leichtbau-Werkstoff mit niedriger Druckfestigkeit integriert. Die durch das erfindungsgemäss geringe Gewicht ermöglichte grössere Wandstärke der Teile, vorzugsweise im Bereich von 3 bis 6 mm, gewährleistet beim Aufprall eines Fussgängers ein sehr gutes Grund-Energie-Absorptionsvermögen und erlaubt ferner den Übergang zwischen Motorhaube 23 und Kotflügel 24 ohne Randverstärkungen 22 oder nur mit geringen Wandverstärkungen auszuführen,

wodurch eine weitere Stelle eines möglichen harten Widerstandes eliminiert wird. Auch wird erfindungsgemäss der Übergang im Vergleich zum Stand der Technik bodennäher gestaltet, wodurch sie nicht mehr im Bereich eines möglichen Aufschlags liegt. So kann durch die Erfindung die Verkehrssicherheit eines Kraftfahrzeuges auch für Fussgänger gewährleistet werden. Darüberhinaus ist eine solche unter Verwendung des erfindungsgemässen Materials hergestellte Motorhaube deutlich leichter als eine vergleichbare Motorhaube aus Stahlblech.

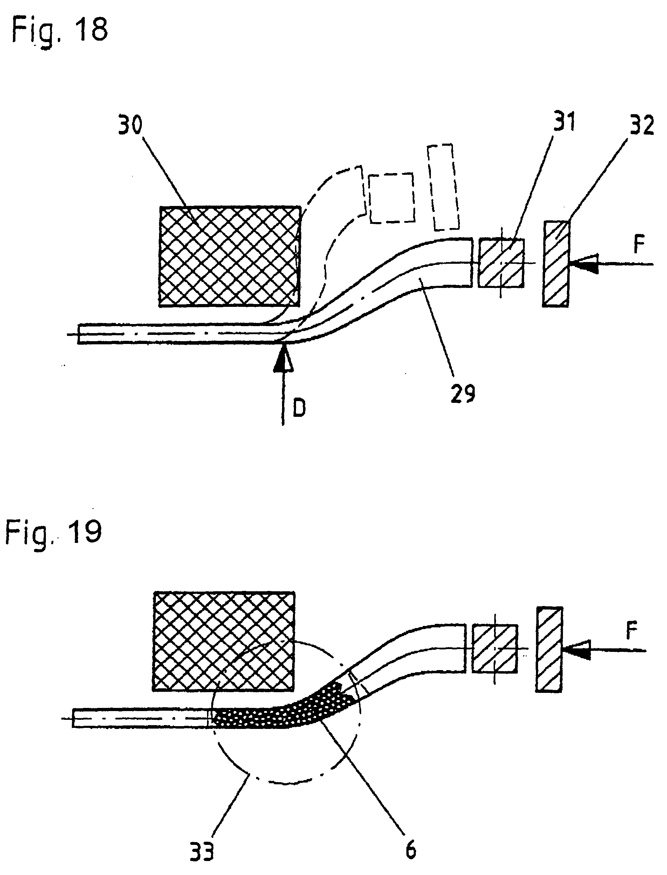

In Fig. 18 ist eine Rahmenhälfte 29 im vorderen Bereich eines Kraftfahrzeuges dargestellt. Dieser Rahmen trägt einerseits den Motor 30 und andere Aggregate und hält andererseits den Crash-Absorber 31 und die vordere Stossstange 32 und weitere Frontteile des Kraftfahrzeugs. Durch die Abmessungen des Motors 30 ist die Höhe des Rahmens unter dem Motor und damit sein Widerstandsmoment beschränkt. Der Pfeil D in Fig. 18 bezeichnet die kritische Stelle. Ein Crash hätte zur Folge, dass sich der vordere Teil des Rahmens nicht wie gewünscht energieabsorbierend verformt, sondern dass er auf den Motor zu verbogen wird und ihn möglicherweise sogar in den Insassenbereich versetzt.

In Fig. 19 ist dargestellt, wie durch eine örtliche Ausfüllung 33 des Rahmens mit dem erfindungsgemässen Leichtbau-Werkstoff 6 diese Schwachstelle beseitigt wurde.

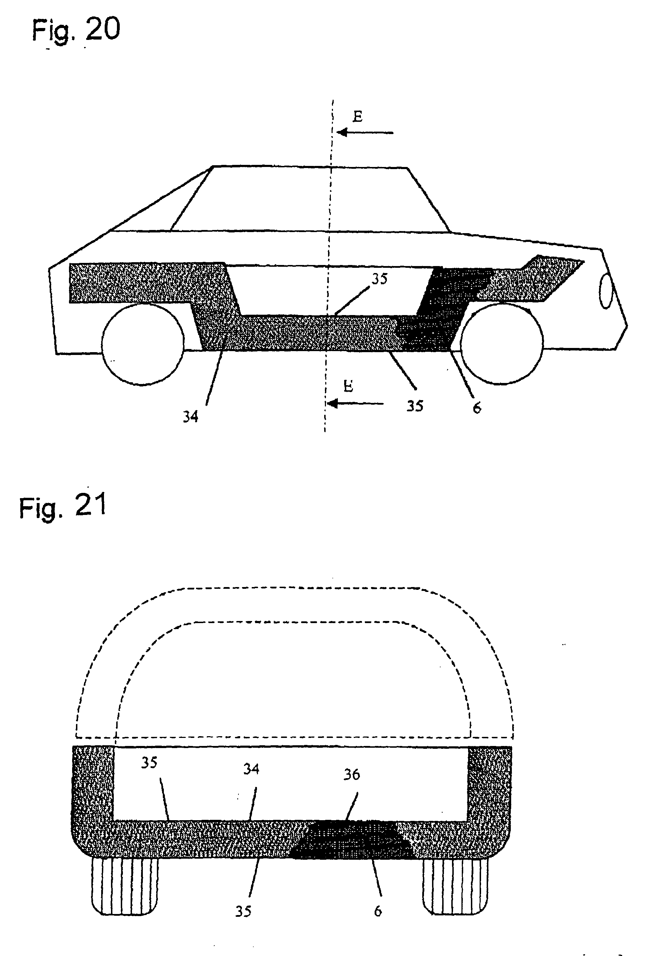

Fig. 20 und 21 zeigen ferner eine Bodengruppe eines Kraftfahrzeugs. Nach dem Stand der Technik bestehen Bodengruppen aus einer Vielzahl von Stahlblechen, die durch Schweissautomaten zusammengefügt werden. Unter Verwendung des erfindungsgemässen Materials besteht die Bodengruppe 34 aus dünnen verbundenen Halbschalen 35 und 36 aus Metall oder Kunststoff und einem Kern aus dem erfindungsgemässen Leichtbau-Werkstoff 6.

Von der Bodengruppe können sowohl das Fahrwerk, als auch alle Aggregate, die Sitze etc. direkt aufgenommen werden. Die Bodengruppe wird an diesen Stellen entsprechend verstärkt. Sie ist ferner so geformt, dass sie einen maximalen Schutz gegen Unfälle ermöglicht, indem sie seitlich wie eine Leitplanke die Fähigkeit der Energieabsorption mit der Fähigkeit der Ableitung des kollidierenden Gegenstandes vereinigt und eine hohe Steifigkeit der gesamten Bodengruppe gewährleistet.

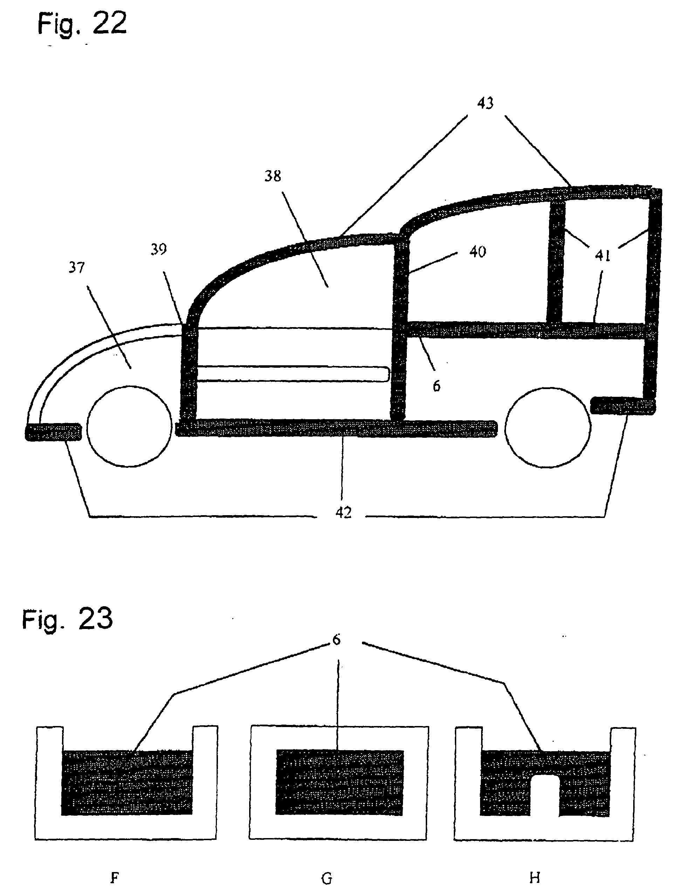

In Fig. 22 ist die Seite 37 eines herkömmlichen Lieferwagens dargestellt. Lieferwagen dieser Art werden auf Personenkraftfahrzeug-Plattformen aufgebaut, die in der Regel nicht für das Zusatzgewicht vorbereitet sind. Daher ist der Leichtbau bei Lieferwägen von grösster Wichtigkeit. Die Fig. 22 zeigt, wie u.a. im Bereich der A-Säule 39, der B-Säule 40, des Kastenaufbaus 41, der Bodengruppe 42 und im Dachbereich 43 Verstärkungsmassnahmen, wie in Fig. 23 als F, G, H dargestellt, durch Einsatz des erfindungsgemässen Werkstoffes durchgeführt werden können. Diese Verstärkungsmassnahmen ermöglichen im Bereich der Metallbauteile einen Leichtbau und führen somit zu einer Gewichtsreduzierung.

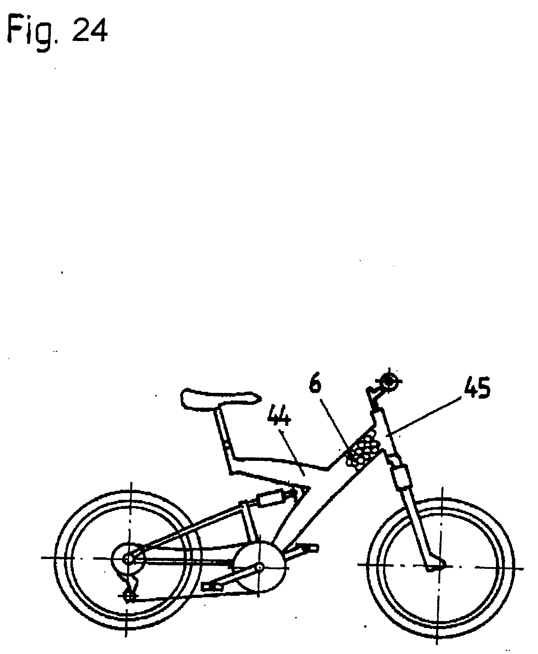

Fig. 24 zeigt den Rahmen 44 eines Sport-Mountainbikes. In der konventionellen Ausführung in einer Aluminium-Schweisskonstruktion wiegt der Aluminium-Rahmen 4,5 kg. Das ist für ein Gerät für den Leistungssport sehr hoch. Trotzdem erweist sich die Bruchsicherheit im Lenkkopf 45 als unzureichend. Durch den Einsatz von verschweissten sehr dünnen Aluminum-Halbschalen und das Ausfüllen des Hohlraumes mit dem erfindungsgemässen Leichtbau-Werkstoff konnte das Rahmengewicht von 4,5 kg auf 0,99 kg und damit um 78 % gesenkt werden.

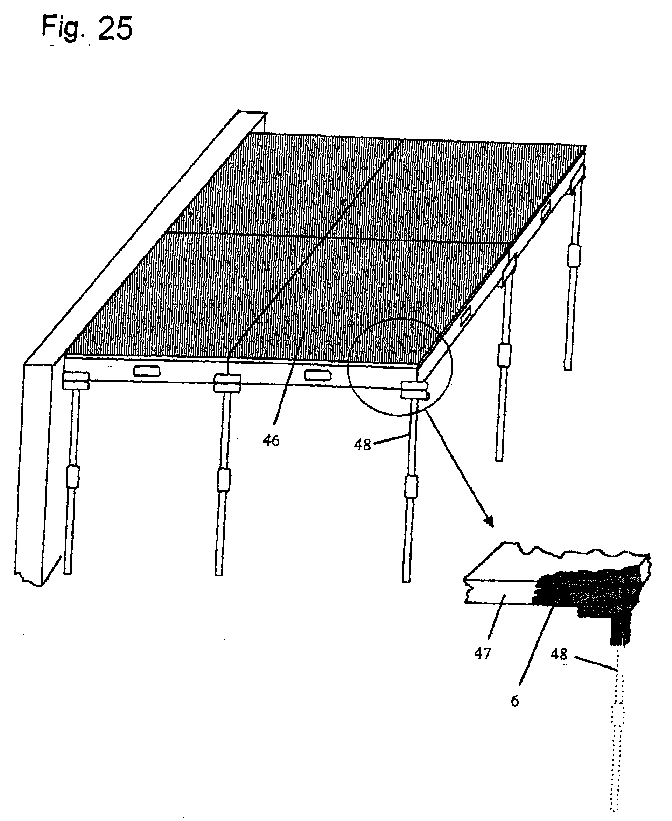

Fig. 25 zeigt eine Betonverschalung für eine Decke. Die Deckenschalung liegt auf einem Gestell 48 auf. Die bekannten Betonschalungsbretter bestehen aus einem Schichtholz 46 mit einer Oberflächenversiegelung. Das Schichtholz muss vor jedem Einsatz mit einem Trennöl behandelt werden. Durch Aufquellen ist die Lebensdauer auf ca. 20 Einsätze beschränkt. Eine Platte 47 gleicher Stärke aus dem erfindungsgemässen Leichtbau-Werkstoff 6 benötigt kein Trennöl und zeigte auch nach 50 Einsätzen noch kein Verschleiss, der die Lebensdauer beschränken würde.

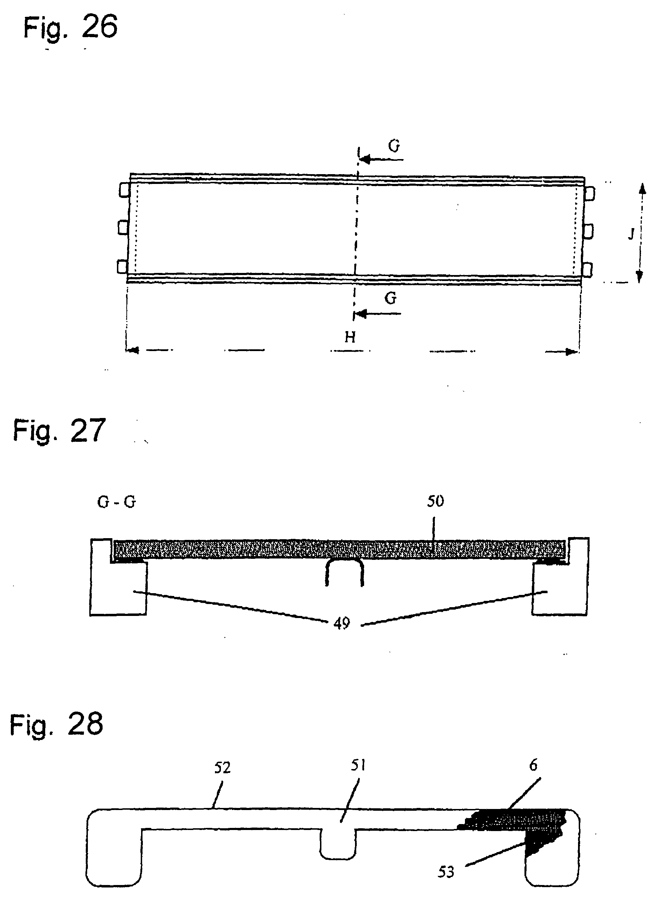

Ferner sind in den Fig. 26, 27, 28 Teile eines Baugerüstes dargestellt. Fig. 26 zeigt die Draufsicht auf einen Gerüstboden mit der Länge H und der Breite J. Fig. 27 zeigt einen Querschnitt dieses Bodens bestehen aus einem Metallrahmen 49 und einem Bodenbrett aus Massivholz 50. Bei einer Abmessung von 2,57 m x 0,61 m hat dieses Brett ein Gewicht von 20,4 kg

Ferner zeigt Fig. 28 einen Gerüstboden hergestellt unter Verwendung des erfindungsgemässen Materials, umfassend Oberflächen 52 und einen Kern aus dem erfindungsgemässen Leichtbau-Werkstoff 6. Bei gleicher Abmessung hat dieses Brett ein Gewicht von nur 7,6 kg. Wegen der Handarbeit zur Montage und Demontage ist es wichtig, dass Gerüstböden sehr leicht sind. Das um 2/3 geringere Gewicht erleichtert die Arbeit und verbilligt die Montage erheblich.

Im folgenden wird beispielhaft ein mögliche Herstellung eines erfindungsgemässen Leichtbau-Werkstoffs mit zwei unterschiedlichen Korngrössengruppen beschrieben.

Als Ausgangskomponenten wurden hierbei eingesetzt:

Mineralschaumgranulat: Primärkorn mit einer Korngrösse von 5 - 6 mm +/ 4% Mineralschaumgranulat: Sekundärkorn mit einer Korngrösse von 0,4 - 0,5 mm +/- 4% Kunstoffbindemittel : PA 6 Flüssigkomponente

Zunächst wurde die Primärkornschüttung in die Füllöffnung einer geschlossenen Zylinderform ($\varnothing$ 80 mm, Höhe 400 mm, entsprechend 2,0 Liter) ohne zusätzliche Verdichtung eingefüllt. Der Volumenanteil des Primärkorn betrug hierbei 64,15%. Durch die Ausübung einer Rüttelbewegung auf die Zylinderform mit Hilfe eines Rütteltisches wurde der Volumenanteil auf 68,50 % erhöht.

Anschliessend wurde die Sekundärkornschüttung in die Füllöffnung der Zylinderform ohne Verdichtung eingefüllt. Der Volumenanteil des Sekundärkornsbetrug hierbei 22,50%, die Füllzeit 5,1 min. Anschliessend wurde wiederum eine Rüttelbewegung für 2,15 min ausgeübt und so ein Volumenanteil von 24, 50% erzielt und unter Einwirkung von Unterdruck (150 PA) für 2,15 min ein Volumenanteil von 24,48 Vol-%. Durch die Rüttelbewegung und die Einwirkung von Unterdruck ist es möglich das Sekundärkorn in den Hohlräumen abzulagern, die bei dem ersten Verfahrensschritt zwischen den Primärkörner entstanden sind, so das dieser Schritt zu einer wesentlichen Verdichtung des Granulatmaterials beiträgt.

Nachfolgend wurde die Kornschüttung in der Form auf 150°C erwärmt und die Flüssigkomponente PA6 (Viskosität 3-4 mPas, nach Zumischung des Aktivators) als Kunststoffbindemittel (Reaktionstemperatur 130°C) für das Haufwerk eingefüllt. Der Füllvorgang wurde hierbei durch Schwerkraft bewirkt. Die Füllzeit betrug 4 Minuten, der Volumenanteil des Bindemittels13,35 %. Zur weiterenVerdichtung wurde zunächst eine Rüttelbewegung mit Schwerkraftwirkung für 2,15 min ausgeübt. Hierdurch wurde ein Volumenanteil von 7,0% erzielt. Anschliessend wurde zusätzlich ein Unterdruck von 150 Pa durch Absaugung am Zylinderboden zur besseren Durchdringung des Haufwerkes ausgeübt. Dieser Vorgang wurde 2,10 min. durchgeführt und führte zu keiner Veränderung des Volumenanteils. Der Austritt der Flüssigkeit an der Bodenkontrollöffnung zeigte, dass das Haufwerk vollständig gefüllt war.

Die Reaktionszeit für die Polymerisation betrug 3 min. Abschliessend wurde der Leichtbau-Werkstoff aus der Zylinderform ausgeschalt.

Die so erhaltene Werkstoffprobe wies folgende Materialwerte auf:

| Rohdichte | 0,41 g/cm$^3$ |
|---|---|
| Druckfestigkeit | 9 N/mm$^2$ bei 2 % Stauchung |
| | 40 N/mm$^2$ bei 10 % Stauchung |

Im Vergleich dazu sind die Materialwerte eines Kunststoffvergleichskörpers (PA6) wie folgt:

| Rohdichte | 1,13 g/cm$^3$ |
|---|---|
| Druckfestigkeit | 5 N/mm$^2$ bei 2 % Stauchung |
| | 38 N/mm$^2$ bei 10 % Stauchung |

**Patentansprüche**

1. Leichtbau-Werkstoff, enthaltend ein Leichtgranulat, insbesondere ein mineralisches Schaumgranulat, und ein organisches Bindemittel
**dadurch gekennzeichnet, dass**
der Volumenanteil des Leichtgranulats im Werkstoff mindestens 50 % beträgt und dass die Bestandteile im Werkstoff gefügedicht gebunden sind.

2. Leichtbau-Werkstoff nach Anspruch 1, **dadurch gekennzeichnet, dass**
der Volumenanteil des Leichtgranulats im Werkstoff mindestens 80 % beträgt.

3. Leichtbau-Werkstoff nach Anspruch 1, **dadurch gekennzeichnet, dass**
der Volumenanteil des Leichtgranulats im Werkstoff mindestens 90 % beträgt.

4. Leichtbau-Werkstoff nach einem der Ansprüche 1-3, **dadurch gekennzeichnet, dass** das Leichtgranulat aus fliessfähigen im wesentlichen kugelförmigen Partikeln besteht.

5. Leichtbau-Werkstoff nach mindestens einem der Ansprüche 1-4, **dadurch gekennzeichnet, dass** die Korngrösse der Leichtgranulatpartikel zwischen 0,01-30 mm, vorzugsweise zwischen 0,04-16 mm, insbesondere bevorzugt zwischen 0,2 und 8 mm liegt.

6. Leichtbau-Werkstoff nach mindestens einem der Ansprüche 1-5, **dadurch gekennzeichnet, dass** die Leichtgranulate eine Rohdichte von 0,040 - 0,600 kg/l, vorzugsweise 0,040 -0,300 kg/l und eine Oberflächenporosität von unter 15%, vorzugsweise unter 5% aufweisen.

7. Leichtbau-Werkstoff nach mindestens einem der Ansprüche 1-6, **dadurch gekennzeichnet, dass** die kugelförmigen Leichtgranulatpartikel im wesentlichen eine einzige Korngrössengruppe aufweisen.

8. Leichtbau-Werkstoff nach mindestens einem der Ansprüche 1-6, **dadurch gekennzeichnet, dass** das Leichtgranulat aus kugelförmigen Partikeln mit zwei unterschiedlichen Korngrössengruppen besteht.

9. Leichtbau-Werkstoff nach Anspruch 8, **dadurch gekennzeichnet, dass** 60-70 Vol-% der Leichtgranulatpartikel einen grösseren Korndurchmesser und 30-40 Vol-% einen kleineren Korndurchmesser aufweisen.

10. Leichtbau-Werkstoff nach Anspruch 8 oder 9, **dadurch gekennzeichnet, dass** der Durchmesser der Leichtgranulatpartikel mit grösserem Korndurchmesser das 6-12 fache, vorzugsweise das 10-fache des Durchmessers der Leichtgranulatpartikel mit kleinerem Korndurchmesser beträgt.

11. Leichtbau-Werkstoff nach einem der Ansprüche 8 bis 10, **dadurch gekennzeichnet, dass** die Leichtgranulatpartikel der kleinen Korngrössengruppe in den zwischen den Leichtgranulatpartikel der grösseren Korngrössengruppe entstehenden Hohlräumen angeordnet sind.

**12.** Leichtbau-Werkstoff nach mindestens einem der Ansprüche 1-6, **dadurch gekennzeichnet, dass** das Leichtgranulat aus kugelförmigen Partikeln mit drei unterschiedlichen Korngrössengruppen besteht.

**13.** Leichtbau-Werkstoff nach Anspruch 12, **dadurch gekennzeichnet, dass** die Leichtgranulatpartikelmischung mindestens 50 Vol-% Partikel mit grosser Korngrösse, maximal 35 Vol-% Partikel mit mittlerer Korngrösse und maximal 15 Vol-% Partikel mit kleiner Korngrösse umfasst.

**14.** Leichtbau-Werkstoff nach Anspruch 12 oder 13, **dadurch gekennzeichnet, dass** der Durchmesser der Leichtgranulatpartikel mit grosser Korngrösse das 6-18 fache, mindestens das 12-fache des Durchmessers der Leichtgranulatpartikel mit mittlerer Korngrösse und der Durchmesser der Leichtgranulatpartikel mit mittlerer Korngrösse das 6-18 fache, mindestens das 12-fache des Durchmessers der Leichtgranulatpartikel mit kleiner Korngrösse beträgt.

**15.** Leichtbau-Werkstoff nach einem der Ansprüche 12 bis 14, **dadurch gekennzeichnet, dass** die Leichtgranulatpartikel der mittleren Korngrössengruppe in den zwischen den Leichtgranulatpartikeln der grösseren Korngrössengruppe entstehenden Hohlräumen angeordnet sind und dass die Leichtgranulatpartikel der kleinen Korngrössengruppe in den zwischen den Leichtgranulatpartikeln der mittleren Korngrössengruppe und der mittleren und der grösseren Korngrössengruppe entstehenden Hohlräumen angeordnet sind.

**16.** Leichtbau-Werkstoff nach mindestens einem der Ansprüche 1-6, **dadurch gekennzeichnet, dass** das Leichtgranulat aus kugelförmigen Partikeln mit mehr als drei unterschiedlichen Korngrössen besteht, wobei die Partikel mit kleinster Korngrösse einen Durchmesser im Bereich von 0,030 bis 0,150 mm aufweisen, und die Korngrössenstufung entsprechend dem einsetzbaren Korn mit maximaler Grösse so erfolgt, dass eine Stufung um den jeweils gleichen Faktor mit einer Toleranz von +/- 20% erfolgt.

**17.** Leichtbau-Werkstoff nach mindestens einem der Ansprüche 1-16, **dadurch gekennzeichnet, dass** das Leichtgranulat ausgewählt ist aus der Gruppe umfassend: Alkali-Silikate, Alkali-Erdalkali-Silikate, Alumo-Silikate, Boro-Silikate, Varianten im Dreistoffsystem $CaO$-$SiO_2$-$Al_2O_3$ in Verbindung mit zusätzlichen Metalloxiden.

**18.** Leichtbau-Werkstoff nach einem der Ansprüche 1-16, **dadurch gekennzeichnet, dass** das Leichtgranulat Aluminiumoxid oder Natriumsilikat ist.

**19.** Leichtbau-Werkstoff nach einem der Ansprüche 1-18, **dadurch gekennzeichnet, dass** zwei oder mehr unterschiedliche Leichtgranulate gegebenenfalls in unterschiedlichen Volumenanteilen enthalten sind.

**20.** Leichtbau-Werkstoff nach einem der Ansprüche 1-16, 19, **dadurch gekennzeichnet, dass** das Leichtgranulat ein Metall oder ein anderer nichtmineralischer Stoff ist.

**21.** Leichtbau-Werkstoff nach einem der Ansprüche 1-20, **dadurch gekennzeichnet, dass** das organische Bindemittel fliessfähig ist und insbesondere aus einer Flüssigkeit oder einem fliessfähigen Pulver besteht.

**22.** Leichtbau-Werkstoff nach Anspruch 21, **dadurch gekennzeichnet, dass** das organische Bindemittel ein Duroplast ist.

**23.** Leichtbau-Werkstoff nach Anspruch 22, **dadurch gekennzeichnet, dass** der Duroplast gewählt ist aus der Gruppe bestehend aus: Epoxidharz, Polyurethan, Phenolharz, ungesättigte Polyester, Silikonharz.

**24.** Leichtbau-Werkstoff nach Anspruch 21, **dadurch gekennzeichnet, dass** das organische Bindemittel ein Thermoplast ist.

**25.** Leichtbau-Werkstoff nach Anspruch 24, **dadurch gekennzeichnet, dass** der Thermoplast gewählt ist aus der Gruppe bestehend aus: Polyamid, Polyolefin, Polystyrol, PVC, Polyacetal, thermoplastisches Polyester.

**26.** Leichtbau-Werkstoff nach Anspruch 21, **dadurch gekennzeichnet, dass** das organische Bindemittel ein Elastomere ist.

**27.** Leichtbau-Werkstoff nach Anspruch 26, **dadurch gekennzeichnet, dass** das Elastomer gewählt ist aus der Gruppe bestehend aus: Synthesekautschuk, Naturkautschuk, Silikonkautschuk.

**28.** Leichtbau-Werkstoff nach wenigstens einem der Ansprüche 1-27, **dadurch gekennzeichnet, dass** als weitere Komponente kurz-oder langfaserige Verstärtkungsfasern enthalten sind.

**29.** Leichtbau-Werkstoff nach wenigstens einem der Ansprüche 1-28, **dadurch gekennzeichnet, dass** der Leichtbau-Werkstoff partiell oder allseits mit einer Oberfläche aus einem anderen Material versehen ist.

**30.** Leichtbau-Werkstoff nach Anspruch 29, **dadurch gekennzeichnet, dass** die Oberfläche aus Stahl, Edelstahl, Faser-Laminaten oder Kunststoff besteht.

**31.** Verbundwerkstoff umfassend einen Kern aus einem Leichtbau-Werkstoff, vorzugsweise nach einem der Ansprüche 1-28, und eine den Kern vollständig oder teilweise umgebenden Oberfläche aus Stahl, Edelstahl, Faser-Laminaten oder Kunststoff.

**32.** Verbundwerkstoff nach Anspruch 31, **dadurch gekennzeichnet dass** der Leichtbau-Werkstoff 55 bis 90 Vol-% Leichtgranulat enthält.

**33.** Verfahren zur Herstellung des Leichtbau Werkstoffes gemäss einem der Ansprüche 1-28, **gekennzeichnet, durch** folgende Schritte:

Einbringen des Leichtgranulats in eine Werkstückform,
gegebenenfalls Erwärmen der Kornschüttung des Leichtgranulats
Einbringen des Bindemittels in die mit dem Leichtgranulathaufwerk gefüllte Werkstückform,
Verfestigen des Bindemittels.

**34.** Verfahren nach Anspruch 33, **dadurch gekennzeichnet, dass** zunächst die Leichtgranulatpartikel mit der grössten Korngrösse und darauffolgend mit abnehmender Grösse eine Korngrösse nach der anderen eingefüllt werden.

**35.** Verfahren nach Anspruch 34, **dadurch gekennzeichnet, dass** der Bildungsvorgang des Leichtgranulathaufwerk durch Rüttelung, Vibration, Ultraschall und/oder durch Anwendung von Unterdruck unterstützt wird.

**36.** Verfahren nach Anspruch 34, **dadurch gekennzeichnet, dass** nach dem Einfüllen der Leichtgranulatpartikel einer bestimmten Grösse, der Vorgang durch Rüttelung, Vibration, Ultraschall und/oder durch Anwendung von Unterdruck unterstützt wird und erst anschliessend Leichtgranulatpartikel einer kleineren Korngrösse eingefüllt werden.

**37.** Verfahren nach einem der Ansprüche 33-36, **dadurch gekennzeichnet, dass** das Einfüllen des Bindemittels durch Rüttelung, Vibration, Ultraschall. Überdruck und Unterdruck unterstützt wird.

**38.** Verfahren nach einem der Ansprüche 33-37, **dadurch gekennzeichnet, dass** der Leichtgranulat-Volumenstrom so bemessen wird, dass eine gleichmässig fliessende Füllfront in der Form aufrecht erhalten werden kann.

**39.** Verfahren nach einem der Ansprüche 33 - 38, **dadurch gekennzeichnet, dass** eine gleichmässig fliessende Bindemittel-Füllfront in die Form aufrecht erhalten wird.

**40.** Verfahren nach einem der Ansprüche 33 - 39 **dadurch gekennzeichnet, dass** die Werkstückform vor dem Befüllen erwärmt wird.

**41.** Verfahren nach einem der Ansprüche 33 - 40, **dadurch gekennzeichnet, dass** das Leichtgranulat vor dem Einfüllen in die Werkstückform erwärmt wird.

**42.** Verfahren nach einem der Ansprüche 33- 41, **dadurch gekennzeichnet, dass** das Bindemittel vor dem Einfüllen in die Werkstückform erwärmt wird.

**43.** Verfahren nach einem der Ansprüche 33 - 42, **dadurch gekennzeichnet, dass** das entstehende Leichtgranulathaufwerk mit einem Kernbindemittel gebunden wird, um einen Infiltrationskern herzustellen.

**44.** Verfahren nach einem der Ansprüche 33-43, **dadurch gekennzeichnet, dass** das Leichtgranulat vor dem Einfüllen mit einem Bindemittel benetzt wird, durch welches Leichtgranulathaufwerk zu einem Infiltrationskern verbunden wird.

**45.** Verfahren nach einem der Ansprüche 43 und 44, **dadurch gekennzeichnet, dass** zunächst nur ein Infiltrationskern aus haufwerksporig gebundenen Leichtgranulaten hergestellt wird, der Kern der Form entnommen wird, und das Bindemittel zu einem anderen Zeitpunkt in den wieder in eine Werkstückform eingebrachten Kern eingefüllt wird.

**46.** Infiltrationskern gebildet nach dem Verfahren gemäss Anspruch 45.

Fig. 1

Fig. 2

Fig. 3

Fig. 4

**Fig. 5**

**Druckfestigkeit Xeratec-Formkörper**
Mineralschaum-Granulat und Kunststoffbindemittel

Kraft (kN)

Druckfestigkeit
- 40,54 N/mm²
- 32,43 N/mm²
- 24,33 N/mm²
- 16,22 N/mm²
- 8,11 N/mm²

Legende:
- 7 : ohne Granulat, nur Kunststoffbindemittel
- 8 : Granulat 8-12 mm, Kunstoffbindemittel
- 9 : Granulat 5-6 mm, Kunstoffbindemittel
- 10 · Granulat 1-3 mm, Kunsstoffbindemittel
- 11 : Granulat 0,4-0,5 + 5-6 mm, Kunsstoffbindemittel

Stauchung ( % )

EP 1 188 730 A2

Fig. 6

Fig. 7

Fig. 8

Fig. 9

13

6

14

15

Fig. 10

# Fig. 11

Fig. 12

Fig. 13

A    B    23    C

24

Fig. 14

23

24

Fig. 15

6

28

27

Fig. 16

28

25

26

23

22

6

24

Fig. 17

Fig. 18

Fig. 19

Fig. 20

Fig. 21

Fig. 22

Fig. 23

F          G          H

Fig. 24

Fig. 25

## Fig. 26

## Fig. 27

G - G

## Fig. 28